(19) Europäisches Patentamt
European Patent Office
Office européen des brevets

(11) EP 3 213 883 B1

(12) EUROPEAN PATENT SPECIFICATION

(45) Date of publication and mention
of the grant of the patent:
27.04.2022 Bulletin 2022/17

(51) International Patent Classification (IPC):
B25J 9/16 (2006.01)   B25J 9/00 (2006.01)
B25J 9/06 (2006.01)

(21) Application number: 15810685.6

(22) Date of filing: 24.07.2015

(52) Cooperative Patent Classification (CPC):
B25J 9/1664; B25J 9/0027; B25J 9/0084;
B25J 9/06; B25J 9/161; B25J 9/1643

(86) International application number:
PCT/JP2015/071167

(87) International publication number:
WO 2016/067689 (06.05.2016 Gazette 2016/18)

(54) MACHINING DEVICE AND PRODUCTION METHOD OF WORKPIECE

BEARBEITUNGSVORRICHTUNG UND HERSTELLUNGSVERFAHREN FÜR EIN WERKSTÜCK

DISPOSITIF D'USINAGE ET PROCÉDÉ DE PRODUCTION DE PIÈCE À TRAVAILLER

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.10.2014 JP 2014220651
29.10.2014 JP 2014220648
29.10.2014 JP 2014220650

(43) Date of publication of application:
06.09.2017 Bulletin 2017/36

(73) Proprietor: Kabushiki Kaisha Yaskawa Denki
Kitakyushu-shi, Fukuoka 806-0004 (JP)

(72) Inventors:
• HIRO, Tatsuo
Kitakyushu-shi
Fukuoka 806-0004 (JP)
• KATAMINE, Kuniaki
Kitakyushu-shi
Fukuoka 806-0004 (JP)
• KAGAWA, Ryuta
Kitakyushu-shi
Fukuoka 806-0004 (JP)
• KINOSHITA, Yusuke
Kitakyushu-shi
Fukuoka 806-0004 (JP)
• OKAHISA, Manabu
Kitakyushu-shi
Fukuoka 806-0004 (JP)
• NAKAKURA, Masami
Kitakyushu-shi
Fukuoka 806-0004 (JP)

(74) Representative: Viering, Jentschura & Partner
mbB
Patent- und Rechtsanwälte
Am Brauhaus 8
01099 Dresden (DE)

(56) References cited:
JP-A- H0 647 689      JP-A- H05 345 291
JP-A- S60 123 263     JP-A- S60 123 294
JP-A- S61 136 782     JP-A- 2003 205 331
JP-A- 2009 125 892    JP-A- 2013 146 859
JP-A- 2014 061 589    JP-A- 2015 123 516
JP-A- 2015 145 048    JP-U- H0 642 090
US-A1- 2006 191 476

## Description

### Technical Field

The present disclosure relates to a method of producing a workpiece.

### Background Art

Patent Literature 1 discloses a spot welding device provided with a workpiece fixing table that holds a body panel of a car or the like, as a workpiece, and a robot that applies spot welding to the workpiece. US 2006/191476 A1 discloses a coating system using a protective layer forming material. The coating system includes a coating device which is movable according to information taught by an operator, and disposed adjacent to a transport line for an object to be coated. The coating system includes a roller mechanism having a roller and a cushion mechanism. The roller is connected to the coating device. The coating system further includes a supply mechanism which supplies liquid material to the roller. The liquid material is dried to form a peelable protective layer on the object. A force is applied to the roller on an external surface of the object through the cushion mechanism. The roller is lifted and lowered corresponding to unevenness to the external surface JPH0642090U discloses a 7-axes type robot as defined by the apparatus features of method claim 1.

Citation List

### Patent Literature

Patent Literature 1: Japanese Unexamined Patent Publication No. 2008-279496

### Summary of Invention

### Technical Problem

In the machining apparatuses using robots, an apparatus that can apply machining to a workpiece in a wide range with an individual robot has been desired in terms of easiness of facility construction or reduction of the number of the robots, and the like. Therefore, an objective of the present disclosure is to provide a production method that can apply machining to a workpiece in a wide range with an individual robot.

### Solution to Problem

A method according to the present invention is defined in claim 1. The dependent claims define further embodiments of such a method.
A method of producing a workpiece according to the present disclosure includes, using the machining apparatus, controlling the first robot to move the end effector to a plurality of portions to be machined of the workpiece, and controlling the first robot to apply machining to the portion to be machined with the end effector in a state where the end effector is arranged to the portion to be machined, controlling the first robot to move the end effector to a plurality of portions to be machined of the workpiece including moving of the end effector between a position higher than a base end of the first arm portion and a position lower than the base end of the first arm portion while changing a distance between the second axis and the third axis with the distance adjustment actuator.

### Advantageous Effects of Invention

According to the present disclosure, machining can be applied to a workpiece in a wide range with an individual robot.

### Brief Description of Drawings

FIG. 1 is a schematic view illustrating a schematic configuration of a first embodiment of a machining apparatus that can be used in a method according to the present invention.
FIGS. 2A and 2B are schematic views illustrating an arrangement condition of a first robot that can be used in a method according to the present invention.
FIG. 3 is a plan view illustrating a state in which the first robot exactly faces a workpiece.
FIG. 4 is a schematic view illustrating an arrangement condition of the first robots.
FIG. 5 is a schematic view illustrating another arrangement condition of the first robots.
FIG. 6 is a schematic view illustrating still another arrangement condition of the first robots.
FIG. 7 is a schematic view illustrating still another arrangement condition of the first robots.
FIG. 8 is a schematic view illustrating still another arrangement of the first robots.
FIG. 9 is a hardware configuration diagram of a controller.
FIG. 10 is a flowchart illustrating a machining procedure, using the first robot.
FIG. 11 is a flowchart illustrating a generation procedure of an operation pattern.
FIGS. 12A to 12F are schematic views illustrating postures of the first robot during execution of machining.
FIG. 13 is a diagram exemplarily illustrating an action of a distance adjustment actuator.
FIG. 14 is a perspective view illustrating another arrangement example of the first robots that can be used in a method according to the present invention.
FIG. 15 is a perspective view illustrating still another arrangement example of the first robot that can be used in a method according to the present invention.
FIG. 16 is a schematic view illustrating a schematic configuration of a second embodiment of a machining apparatus that can be used in a method according to the present invention.
FIG. 17 is a plan view illustrating movable ranges of robots.
FIG. 18 is a perspective view illustrating another arrangement example of the robots that can be used in a method according to the present invention.
FIG. 19 is a perspective view illustrating still another example of the robots that can be used in a method according to the present invention.
FIG. 20 is a perspective view illustrating still another example of the robots that can be used in a method according to the present invention.

## Description of Embodiments

Hereinafter, embodiments will be described in detail with reference to the drawings. In the description, the same elements or elements having the same function are denoted with the same reference sign, and overlapping description is omitted.

1. First Embodiment

[Machining Apparatus]

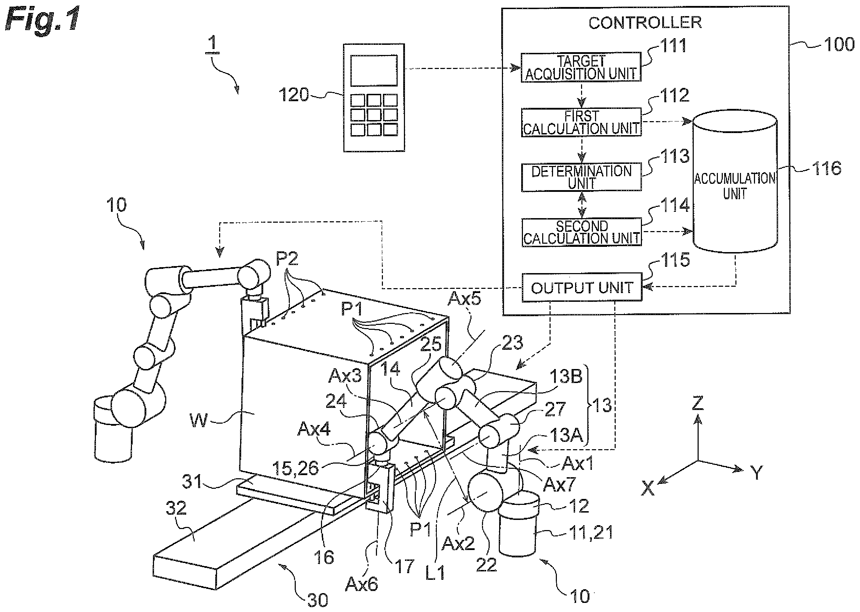

As illustrated in FIG. 1, a machining apparatus 1 (processing apparatus) includes two robots 10 (first robots), a controller 100, and a programming pendant 120.

(Robot)

The robots 10 perform machining of a workpiece W of a body of an automobile. As an example, the robot 10 includes a base 11, a rotating portion 12, a first arm portion 13, a second arm portion 14, a wrist portion 15, a tip portion 16, an end effector 17, a first actuator 21, a second actuator 22, a third actuator 23, a fourth actuator 24, a fifth actuator 25, a sixth actuator 26, and a seventh actuator 27.
The base 11 is fixed to a floor surface (installation surface), and supports the entire robot 10. That is, all of the plurality of robots 10 are fixed to the installation surface.
The rotating portion 12, the first arm portion 13, the second arm portion 14, the wrist portion 15, and the tip portion 16 are mutually connected in series. The rotating portion 12 is provided to the base 11, and is rotatable around a vertical first axis Ax1 (along a z axis in the drawing). In the description below, a "tip" means an end of a side of the tip portion 16, and a "tip portion" means a tip and a portion in the vicinity of the tip. A "base end" means an end of a side of the base 11, and a "base end portion" means a base end and a portion in the vicinity of the base end.
The first arm portion 13 is swingable around a horizontal second axis Ax2 that passes through a connecting portion of the rotating portion 12 and the first arm portion 13.
The second arm portion 14 is swingable around a horizontal third axis Ax3 that passes through a connecting portion of the first arm portion 13 and the second arm portion 14. The third axis Ax3 is parallel to the second axis Ax2. The second arm portion 14 is rotatable around a fifth axis Ax5 along a central axis.
The wrist portion 15 is swingable around a fourth axis Ax4 that passes through a connecting portion of the second arm portion 14 and the wrist portion 15.

The tip portion 16 is rotatable around a sixth axis Ax6 along a central axis of the wrist portion 15.

The end effector 17 is a spot welding device, for example, and is provided to the tip portion 16. As an example, the end effector 17 is detachably attached to the tip portion 16, and is exchangeable with another end effector. The end effector 17 may be integrated with the tip portion 16. The end effector 17 may be any tool as long as the tool is a tool for machining, and is not limited to the spot welding device. For example, the end effector 17 may be an arc welding device or a cutter, a screwing device, or the like for workpiece other than welding.

Here, the first arm portion 13 is configured from links 13A and 13B that are mutually connected in series. The link 13A is connected to the rotating portion 12, and the link 13B is connected to the second arm portion 14. The first arm portion 13 is bendable around a seventh axis Ax7 that passes through a connecting portion of the links 13A and 13B. In other words, the link 13B is swingable around the seventh axis Ax7 that passes through the connecting portion of the links 13A and 13B. The seventh axis Ax7 is parallel to the second axis Ax2 and the third axis Ax3.

The first actuator 21 is provided to the base 11, for example, and rotates the rotating portion 12 around the first axis Ax1.

The second actuator 22 is provided to the rotating portion 12, for example, and swings the first arm portion 13 around the second axis Ax2.

The third actuator 23 is provided to a tip portion of the first arm portion 13, for example, and swings the second arm portion 14 around the third axis Ax3.

The fifth actuator 25 is provided to a base end portion of the second arm portion 14, for example, and rotates the second arm portion 14 around the fifth axis Ax5. Since the wrist portion 15 is connected to the second arm portion 14, rotating of the second arm portion 14 corresponds to rotating of the wrist portion 15. That is, the fifth actuator 25 rotates the wrist portion 15 around the fifth axis Ax5.

The fourth actuator 24 is provided to a tip portion of the second arm portion 14, for example, and swings the wrist portion 15 around the fourth axis Ax4.

The sixth actuator 26 is provided to the wrist portion 15, for example, and rotates the tip portion 16 around the sixth axis Ax6.

The fourth actuator 24, the fifth actuator 25, and the sixth actuator 26 are an example of a plurality of posture adjustment actuators that adjusts the posture of the tip portion 16.

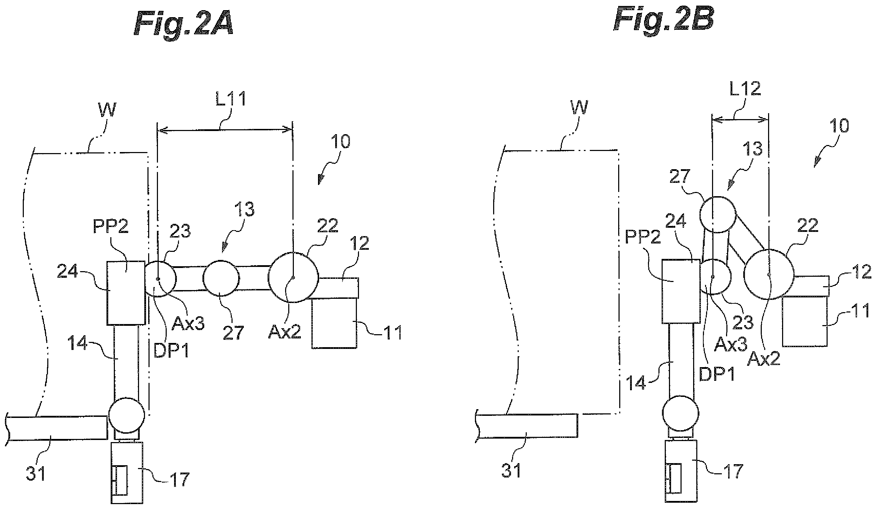

The seventh actuator 27 (distance adjustment actuator) adjusts a distance L1 between the second axis Ax2 and the third axis Ax3. As illustrated in FIGS. 2A and 2B, the seventh actuator 27 adjusts the distance L1 between a longest distance L11 and a shortest distance L12.

As illustrated in FIG. 1, the seventh actuator 27 is provided to a tip portion of the link 13A, and bends the first arm portion 13 around the seventh axis Ax7. In other words, the seventh actuator 27 swings the link 13B around the seventh axis Ax7. In this configuration, the longest distance L11 is the distance L1 in a state where the first arm portion 13 is not bent (a state where the link 13B is not inclined with respect to the link 13A). The shortest distance L12 is the distance L1 in a state where the first arm portion 13 is bent to the movable limit of the seventh actuator 27.

The seventh actuator 27 is not necessarily the one that bend the first arm portion 13, and any actuator may be employed as long as the actuator can adjust the distance L1 between the second axis Ax2 and the third axis Ax3. For example, the seventh actuator 27 may be a direct acting actuator that expands/contracts the first arm portion 13.

As described above, the robot 10 is configured by adding redundant degree of freedom for adjusting the distance L1 between the second axis Ax2 and the third axis Ax3 to a so-called 6-axis robot in which position and posture of the tip portion 16 are freely changeable. The actuators 21 to 26 are configured from electric servo motors, gear heads, brakes, and the like. The servo motors, gear heads, brakes, and the like are not necessarily arranged on the axes Ax1 to Ax7, and may be arranged in positions separated from these axes.

(Conveyance Device)

The machining apparatus 1 may further include a conveyance device 30. The conveyance device 30 conveys the workpiece W to change a relative position of the workpiece W and the robot 10. As an example, the conveyance device 30 includes a pallet 31 (workpiece arranging portion) and a conveyance actuator 32. The pallet 31 supports the workpiece W. The conveyance actuator 32 conveys the pallet 31 along a horizontal straight line (along an x axis illustrated in the drawing), using an electric motor or a hydraulic motor as a power source.

(Arrangement of Robot)

As illustrated in FIG 2A, the robot 10 is positioned to cause the tip portion DP1 of the first arm portion 13 or the base end portion PP2 of the second arm portion 14 to interfere with the workpiece W when the first arm portion 13 is rotated around the second axis Ax2, where the distance L1 is the longest distance L11, in a state where the robot 10 exactly faces the workpiece W (hereinafter, this condition is referred to as "arrangement condition 1").

As illustrated in FIG 2B, the robot 10 may be positioned to cause the tip portion DP1 of the first arm portion 13 and the base end portion PP2 of the second arm portion 14 not to interfere with the workpiece W when the first arm portion 13 is rotated around the second axis Ax2, where the distance L1 is the shortest distance L12, in a state where the robot 10 exactly faces the workpiece W (hereinafter, this condition is referred to as "arrangement condition 2").

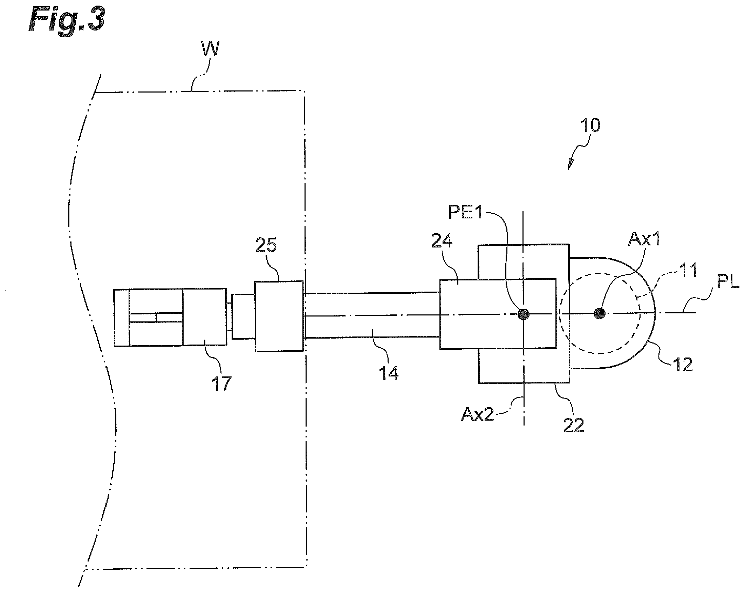

Note that the "exactly face" means a state in which the base end PE1 (an intersection point of the central axis of the first arm portion 13 and the second axis Ax2) of the first arm portion 13 is positioned between the first axis Ax1 and the workpiece W in plan view, and is positioned on a perpendicular line PL from the first axis Ax1 to the workpiece W, as illustrated in FIG. 3.

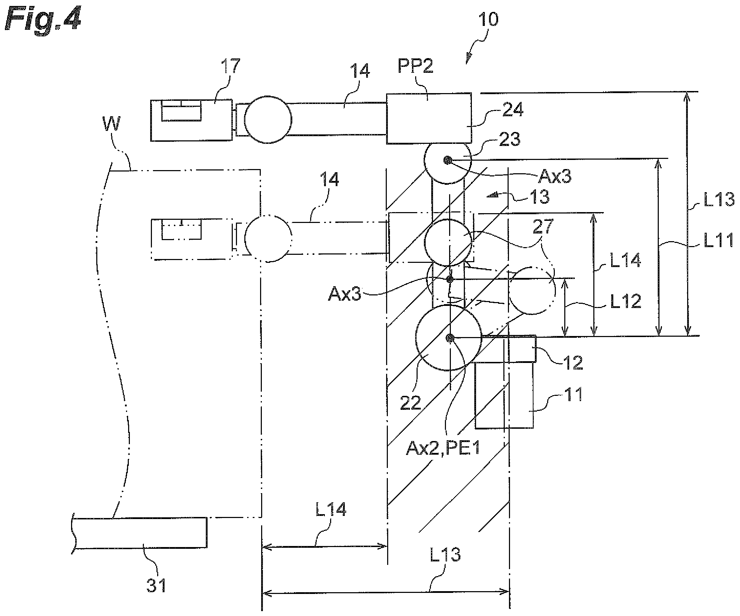

A detailed condition for satisfying the arrangement condition 1, 2 will be exemplarily described with reference to FIG. 4. As illustrated in FIG. 4, the robot 10 may be positioned to cause a distance from the workpiece W to the base end PE1 of the first arm portion 13 to become less than a third length L13, in a state where the robot 10 exactly faces the workpiece W (hereinafter, this condition is referred to as "arrangement condition 1a"). The third length L13 is a distance from the base end PE1 of the first arm portion 13 to a distal portion on an external peripheral surface of the second arm portion 14, in a state where the second arm portion 14 is vertical to a straight line perpendicular to the second axis Ax2 and the third axis Ax3, where the distance L1 is the longest distance L11. The "distal portion on the external peripheral surface of the second arm portion 14" is a portion at an opposite side to the second axis Ax2, of the external peripheral surface of the second arm portion 14. When the arrangement of the robot 10 satisfies the arrangement condition 1a, the arrangement condition 1 is also satisfied.

The robot 10 may be positioned to cause the distance from the workpiece W to the base end PE1 of the first arm portion 13 to exceed a fourth length L14, in a state where the robot 10 exactly faces the workpiece W (hereinafter, this condition is referred to as "arrangement condition 2a"). The fourth length L14 is a distance from the base end PE1 of the first arm portion 13 to the distal portion of the external peripheral surface of the second arm portion 14, in a state where the second arm portion 14 is vertical to the straight line perpendicular to the second axis Ax2 and the third axis Ax3, where the distance L1 is the shortest distance L12. When the arrangement of the robot 10 satisfies the arrangement condition 2a, the arrangement condition 2 is also satisfied.

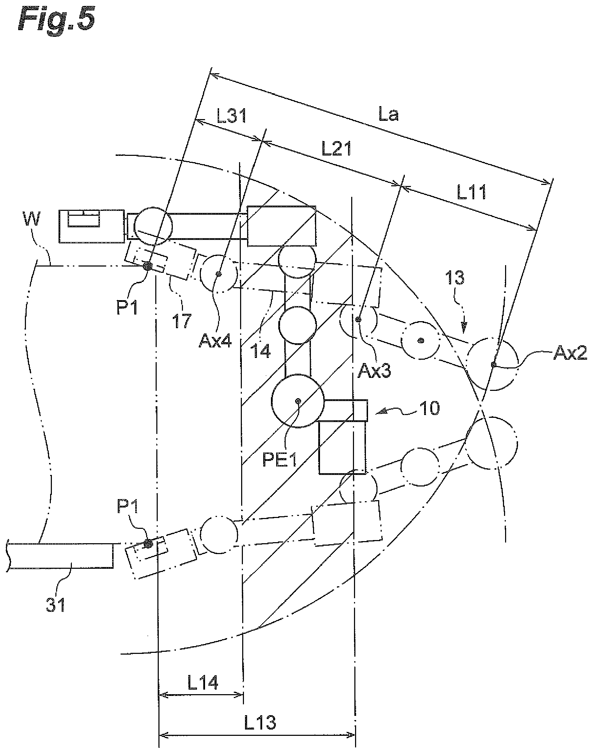

As illustrated in FIG. 5, the robot 10 may be positioned such that a distance from a highest portion to be machined PI in the workpiece W to the base end PE1 of the first arm portion 13, and a distance from a lowest portion to be machined PI in the workpiece to the base end PE1 of the first arm portion 13 become a length La obtained by a formula (1) or less, in a state where the robot 10 exactly faces the workpiece W.

$$La = L11 + L21 + L31 \quad ... \quad (1)$$

L11: the longest distance from the second axis Ax2 to the third axis Ax3
L21: the distance from the third axis Ax3 to the fourth axis Ax4
L31: the distance from the fourth axis Ax4 to the end effector 17

Note that the "distance to the end effector 17" means a distance to a portion of the end effector 17, the portion acting on the portion to be machined PI (hereinafter, referred to as "acting portion").

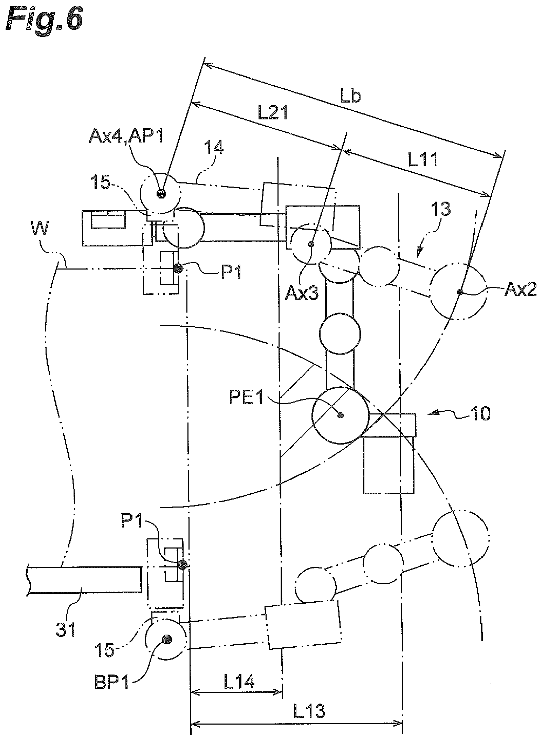

As illustrated in FIG. 6, the robot 10 may be positioned such that a distance from the position of the fourth axis Ax4 to the base end PE1 of the first arm portion 13 when the end effector 17 is arranged to be able to apply machining to the highest portion to be machined PI in the workpiece W, and the distance from the position of the fourth axis Ax4 to the base end PE1 of the first arm portion 13 when the end effector 17 is arranged to be able to apply machining to the lowest portion to be machined PI in the workpiece W become a length Lb obtained by a formula (2) or less, in a state where the robot 10 exactly faces the workpiece W.

$$Lb = L11 + L21 \quad ... \quad (2)$$

Arrangement of the end effector 17 to the portion to be machined PI means arrangement of the acting portion of the end effector 17 to the portion to be machined PI. A posture of the end effector 17 by which machining can be applied to the portion to be machined PI is determined in accordance with a state of the portion to be machined PI. For example, when the end effector 17 is a spot welding device, the posture of the end effector 17 is determined to be able to sandwich an object to be welded with electrodes. As an example, FIG. 6 exemplarily illustrates a case in which the posture of the end effector 17 by which machining can be applied to the portion to be machined PI is vertical (a case in which the central axis of the wrist portion 15 extends along a vertical axis). In consideration of such a case, the robot 10 may be positioned such that the distance from the position of the fourth axis Ax4 to the base end PE1 of the first arm portion 13 when the wrist portion 15 is oriented downward in the vertical direction and the end effector 17 is arranged to the highest portion to be machined PI in the workpiece W, and the distance from the position of the fourth axis Ax4 to the base end PE1 of the first arm portion 13 when the wrist portion 15 is oriented upward in the vertical direction and the end effector 17 is arranged to the lowest portion to be machined PI in the workpiece W, in a state where the robot 10 exactly faces the workpiece W become a length Lb obtained by the formula (2) or less.

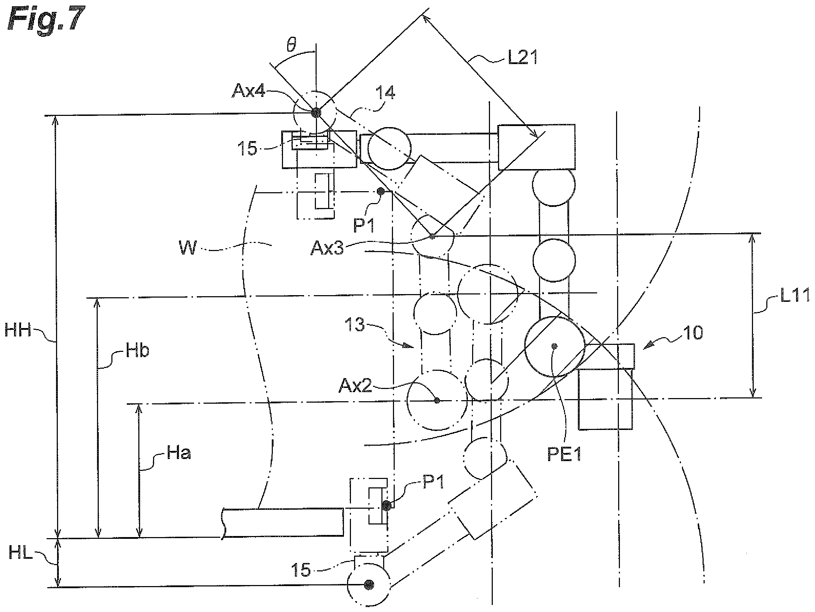

As illustrated in FIG. 7, the robot 10 may be positioned to cause the height of the base end PE1 of the first arm portion 13 to become a height Ha obtained by a formula (3) or more.

$$Ha = HH - L21 \cdot \cos\theta - L11 \quad ... \quad (3)$$

HH: the height of the fourth axis when the wrist portion is oriented downward in the vertical direction and the end effector is positioned to the highest portion to be machined in the workpiece

$\theta$: the minimum value of an angle made by a straight line perpendicular to the third axis Ax3 and the fourth axis Ax4, and the central axis of the wrist portion 15

Note that the "minimum value of an angle" means a minimum value in the movable range.

The robot 10 may be positioned to cause the height of the base end PE1 of the first arm portion 13 to become a height Hb obtained by a formula (4) or less.

$$Hb = HL + L21 \cdot \cos\theta + L11 \quad ... \quad (4)$$

HL: the height of the fourth axis when the wrist portion is oriented upward in the vertical direction, and the end effector is arranged to the lowest portion to be machined in the workpiece

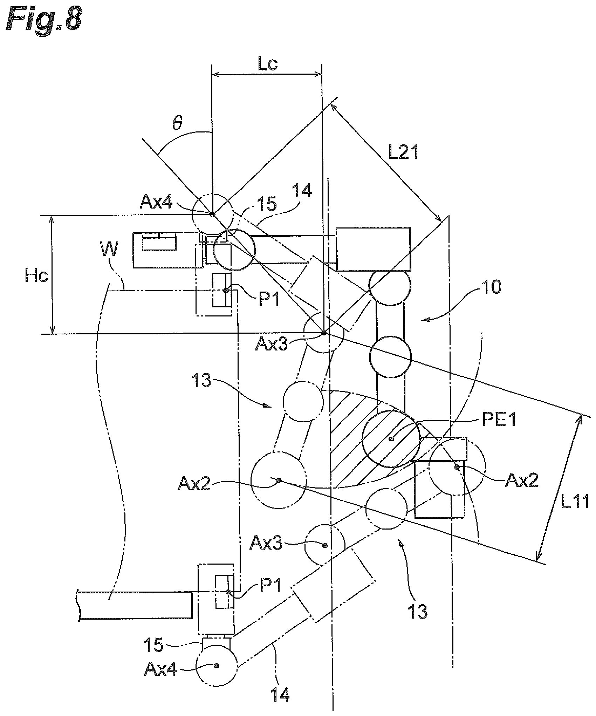

As illustrated in FIG. 8, the robot 10 may be positioned such that a distance from a position to the base end PE1 of the first arm portion 13, the position being obtained such that the position of the fourth axis Ax4 when the wrist portion 15 is oriented downward in the vertical direction and the end effector 17 is positioned to the highest portion to be machined PI in the workpiece W is shifted to a front side by a distance Lc obtained by a formula (5), and is shifted downward by a height Hc obtained by a formula (6), and a distance from a position to the base end PE1 of the first arm portion 13, the position being obtained such that the position of the fourth axis Ax4 when the wrist portion 15 is oriented upward in the vertical direction and the end effector 17 is arranged to the lowest portion to be machined PI in the workpiece W is shifted to the front side by the distance Lc obtained by the formula (5), and is shifted by the height Hc obtained by the formula (6) become the longest distance L11 or less, in a state where the robot 10 exactly faces the workpiece W.

$$Lc = L21 \cdot \sin\theta \quad ... \quad (5)$$

$$Hc = L21 \cdot \cos\theta \quad ... \quad (6)$$

The two robots 10 are arranged to sandwich the workpiece W in the direction (along the y axis in the drawing) perpendicular to a conveying direction (along the x axis in the drawing) by the conveyance device 30. Hereinafter, a positive direction of the y axis in the drawing is a "left direction", and a negative direction of the y axis in the drawing is a "right direction". The robot 10 on the left side performs machining to the portion to be machined PI on the left side of the workpiece W and the robot 10 on the right side performs machining to a portion to be machined P2 on the right side of the workpiece W.

The robot 10 on the left side is arranged to be able to apply machining to all of the portions to be machined PI from the robot 10 side (the left side) without interfering with the workpiece W. As an example, the robot 10 on the left side is arranged to cause the end effector 17 to reach both of the uppermost portion to be machined PI and the lowermost portion to be machined PI without interfering with the workpiece W.

The robot 10 on the right side is arranged to be able to apply machining to all of the portions to be machined P2 from the robot 10 side (the right side) without interfering with the workpiece W. As an example, the robot 10 on the right side is arranged to cause the end effector 17 to reach both of the uppermost portion to be machined P2 and the lowermost portion to be machined P2 without interfering with the workpiece W.

(Controller and Programming Pendant)

The controller 100 is a device that controls the two robots 10 and the conveyance device 30. The programming pendant 120 is a device that inputs/outputs data to/from the controller 100 by wired or wireless means.

The controller 100 includes a target acquisition unit 111, a first calculation unit 112, a determination unit 113, a second calculation unit 114, an output unit 115, and an accumulation unit 116, as functional configurations.

The accumulation unit 116 accumulates operation patterns of the robots 10. The operation patterns are time series data of operation target values of the actuators 21 to 27, for example.

The target acquisition unit 111 acquires target values of position/posture of the tip portion 16 from the programming pendant 120. The target values of the position/posture acquired by the target acquisition unit 111 may be input to the programming pendant 120 by the user or may be read from a recording medium through the programming pendant 120.

The first calculation unit 112 calculates the operation target values of the actuators 21 to 26 corresponding to the target values of the position/posture in a condition where the operation target value of the seventh actuator 27 for distance adjustment is fixed to an initial value, and stores the operation target values of the actuators 21 to 27 in the accumulation unit 116.

The operation target value of the seventh actuator 27 is a target value of an operation amount by which the distance L1 between the second axis Ax2 and the third axis Ax3 is adjusted, and is a target value of a bending angle of the first arm portion 13, for example. An initial value of the bending angle of the first arm portion is, for example, 0°.

The operation target value of the first actuator 21 is a target value of a rotating angle of the rotating portion 12, for example. The operation target value of the second actuator 22 is a target value of a swing angle of the first arm portion 13, for example. The operation target value of the third actuator 23 is a target value of a swing angle of the second arm portion 14. The operation target value of the fifth actuator 25 is a target value of a rotating angle of the wrist portion 15, for example. The operation target value of the fourth actuator 24 is a target value of a swing angle of the wrist portion 15, for example. The operation target value of the sixth actuator 26 is a target value of a rotating angle of the tip portion 16.

The operation target values of the actuators 21 to 26 are calculated by inverse kinematics calculation, for example. The first calculation unit 112 stores calculation results of the operation target values of the actuators 21 to 27 in the accumulation unit 116.

The determination unit 113 determines whether the operation target values stored in the accumulation unit 116 are outputtable. For example, the determination unit 113 determines that the operation target values are not outputtable in a case where interference is caused between the robots 10 and the workpiece W when the actuators 21 to 27 are operated with the operation target values stored in the accumulation unit 116.

The determination unit 113 may also determine that the operation target values are not outputtable in a case where the operation target value of an actuator to be determined calculated by the first calculation unit 112 falls outside an allowable range where at least one of the actuators 21 to 26 is the actuator to be determined. The determination unit 113 may have all of the actuators 21 to 26 as the actuators to be determined, or may have only a part of the actuators 21 to 26 (for example, only the second actuator 22, the third actuator 23, and the fourth actuator 24) as the actuators to be determined. The determination unit 113 may have only the third actuator 23 and the fourth actuator 24 as the actuators to be determined, or may have only at least one of the third actuator 23 and the fourth actuator 24 as the actuator to be determined. The allowable range is set such that the operation amount of a portion driven by the actuator to be determined falls within the movable range. For example, when the third actuator 23 is the actuator to be determined, the allowable range of the operation target value of the third actuator 23 is set such that the swing angle of the second arm portion 14 falls within the movable range.

The second calculation unit 114 modifies the operation target values of the actuators 21 to 27 to become outputtable when the operation target values are determined not to be outputtable by the determination unit 113. For example, the second calculation unit 114 modifies the operation target values of the actuators 21 to 27 to make the distance L1 between the second axis Ax2 and the third axis Ax3 small to avoid the interference between the robots 10 and the workpiece W when generation of the interference between the robots 10 and the workpiece W is determined by the determination unit 113. To be specific, the second calculation unit 114 may set a constraint condition to avoid the interference between the robots 10 and the workpiece W, and modify the operation target values of the actuators 21 to 27 by inverse kinematics calculation to which the constraint condition is applied.

The second calculation unit 114 may modify the operation target values of the actuators 21 to 27 to cause the operation target values to fall within the allowable range when the operation target value of at least one actuator to be determined falls outside the allowable range. To be specific, the second calculation unit 114 may set the constraint condition such that the operation target value of the actuator, which has the operation target value falling outside the allowable range, falls within the allowable range, and then modify the operation target ranges of the actuators 21 to 27 by the inverse kinematics calculation to which the constraint condition is applied.

The second calculation unit 114 may set the constraint condition such that the first arm portion 13 is bent in a direction into which the seventh axis Ax7 for distance adjustment is away from the workpiece W, and calculate the operation target values of the actuators 21 to 27.

The second calculation unit 114 stores calculation results of the operation target values of the actuators 21 to 27 in the accumulation unit 116 to overwrite immediately preceding calculation results.

The output unit 115 controls the actuators 21 to 27 in accordance with the operation target values. To be specific, the output unit 115 controls the actuators 21 to 27 such that the operation amounts of respective units by the actuators 21 to 27 are approximately matched with the set operation target values. The output unit 115 also controls the conveyance actuator 32, in addition to the actuators 21 to 27.

The controller 100 may just be configured to execute: acquisition of the target values of the position/posture of the tip portion 16; calculation of the operation target values of the actuators 21 to 26 corresponding to the target values of the position/posture in the condition in which the operation target value of the seventh actuator 27 for distance adjustment is fixed; determination of whether the calculated operation target values are outputtable; modification of the operation target values of the actuators 21 to 27 to become outputtable when the operation target values are determined not to be outputtable; and controlling the actuators 21 to 27 in accordance with the operation target values. Therefore, a hardware configuration of the controller 100 is not necessarily separated into the target acquisition unit 111, the first calculation unit 112, the determination unit 113, the second calculation unit 114, the output unit 115, and the accumulation unit 116.

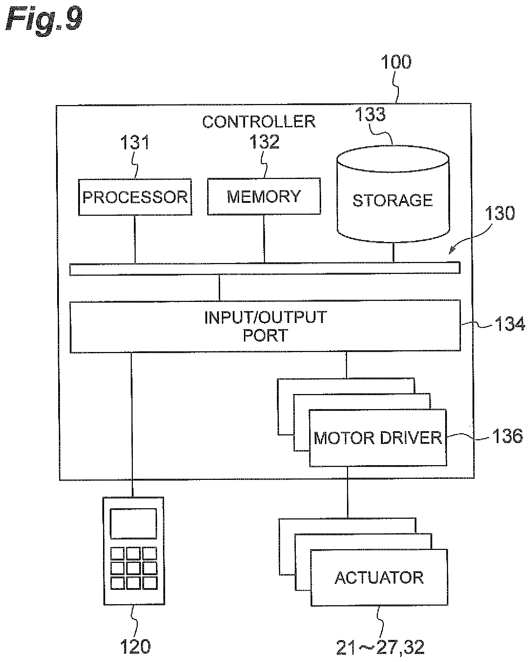

FIG. 9 is a diagram illustrating an example of the hardware configuration of the controller 100. The controller 100 exemplarily illustrated in FIG. 9 includes a circuit 130. The circuit 130 includes a processor 131, a memory 132, a storage 133, an input/output port 134, and a plurality of motor drivers 136. The input/output port 134 inputs/outputs data to/from the programming pendant 120 and the plurality of motor drivers 136. The plurality of motor drivers 136 respectively controls the actuators 21 to 27 and the conveyance actuators 32 of the two robots 10. The processor 131 executes a program in cooperation with at least one of the memory 132 and the storage 133, and inputs/outputs data through the input/output port 134, thereby to cause the controller 100 to function as the target acquisition unit 111, the first calculation unit 112, the determination unit 113, the second calculation unit 114, the output unit 115, and the accumulation unit 116.

The hardware configuration of the controller 100 is not necessarily limited to one that forms the respective functions by execution of the program. For example, at least a part of the target acquisition unit 111, the first calculation unit 112, the determination unit 113, the second calculation unit 114, the output unit 115, and the accumulation unit 116 may be configured from logic circuits specializing in the functions, or may be configured from an application specific integrated circuit (ASIC) in which the logic circuits are integrated.

[Control Method]

Next, a procedure of controlling the robots 10 and the conveyance device 30 by the controller 100 will be described as an example of a control method according to the present disclosure.

(Outline of Control Procedure)

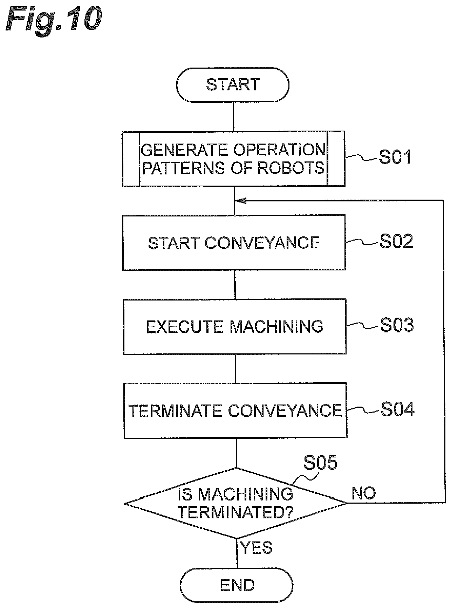

As illustrated in FIG. 10, first, the controller 100 executes step S01. In step S01, at least one of the first calculation unit 112 and the second calculation unit 114 stores the calculation results of the operation target values of the actuators 21 to 27 in the accumulation unit 116, and constructs the operation patterns of the two robots 10. The operation patterns of the two robots 10 are constructed to apply machining to the workpiece W.

Next, the controller 100 executes steps S02 to S04. In step S02, the output unit 115 controls the conveyance actuator 32 to start conveyance of the workpiece W. In step S03, the output unit 115 controls the two robots 10 to execute machining of the workpiece W. That is, the output unit 115 controls the actuators 21 to 27 of the two robots 10 in accordance with the operation target values stored in the accumulation unit 116. In step S04, the output unit 115 controls the conveyance actuator 32 to terminate the conveyance of the workpiece W.

Next, the controller 100 executes step S05. In step S05, the output unit 115 determines whether a command of termination of machining has been input. The command of termination of machining is input through the programming pendant 120, for example. When the command of termination of machining has not been input, the controller 100 returns the processing to step S02. Accordingly, the same machining procedure is repeated. When the command of termination of machining has been input, the controller 100 terminates the processing.

(Procedure of Generating Operation Pattern)

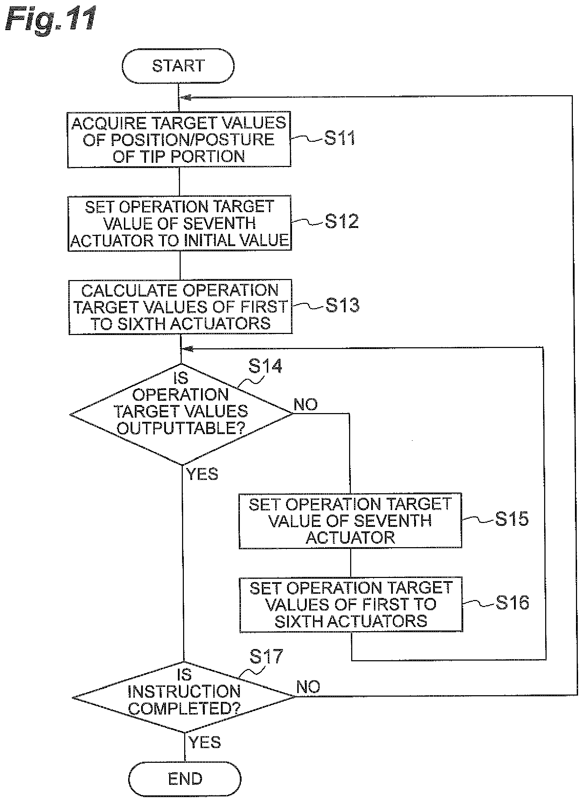

Next, a procedure of generating the operation pattern in step S01 will be described in more detail. As illustrated in FIG. 11, first, the controller 100 executes step S11. In step S11, the target acquisition unit 111 acquires the target values of the position/posture of the tip portion 16 from the programming pendant 120.

Next, the controller 100 executes steps S12 and S13. In step S12, the first calculation unit 112 sets the operation target value of the seventh actuator 27 for distance adjustment to the initial value. For example, the first calculation unit 112 sets the bending angle of the first arm portion 13 to 0°. In step S13, the first calculation unit 112 calculates the operation target values of the actuators 21 to 26 corresponding to the target values of the position/posture in the condition where the operation target value of the seventh actuator 27 is fixed to the initial value, and stores the calculation results of the actuators 21 to 27 in the accumulation unit 116.

Next, the controller 100 executes step S14. In step S14, the determination unit 113 determines whether the operation target values stored in the accumulation unit 116 are outputtable. For example, the determination unit 113 determines that the operation target values are not outputtable when the interference is caused between the robots 10 and the workpiece W when the actuators 21 to 27 are operated with the operation target values stored in the accumulation unit 116.

The determination unit 113 may determine that the operation target values are not outputtable also when the operation target value of the actuator to be determined falls outside the allowable range where at least one of the actuators 21 to 26 is the actuator to be determined.

In step S14, when the operation target values are determined not to be outputtable, the controller 100 executes steps S15 and S16.

In step S15, the second calculation unit 114 sets the operation target value of the seventh actuator 27 to cause the operation target values to become outputtable. For example, the second calculation unit 114 sets the operation target value of the seventh actuator 27 to make the distance L1 short to avoid the interference between the robots 10 and the workpiece W. The second calculation unit 114 may set the operation target value of the seventh actuator 27 to cause other actuators to share a part of the operation target values that fall outside the allowable range.

In step S16, the second calculation unit 114 calculates the operation target values of the actuators 21 to 26 corresponding to the target values of the position/posture in a condition where the operation target value of the seventh actuator 27 is fixed to the set value in step S15. The second calculation unit 114 stores the calculation results of the operation target values of the actuators 21 to 27 in the accumulation unit 116, and overwrites the immediately preceding calculation results.

Subsequently, the controller 100 returns the processing to step S14. Accordingly, steps S14 and S15 are repeated until when the operation target values become outputtable.

In steps S15 and S16, the second calculation unit 114 may calculate the operation target values of the actuators 21 to 27 such that the first arm portion 13 is bent in the direction into which the seventh axis Ax7 for distance adjustment is away from the workpiece W. That is, the controller 100 may control the actuators 21 to 27 to bend the first arm portion 13 in the direction into which the seventh axis Ax7 is away from the workpiece W.

The procedure of calculating the operation target values of the actuators 21 to 27 by the second calculation unit 114 is not limited to the above procedure. For example, in step S15, the operation target value of the actuator itself, the operation target value falling outside the allowable range, may be set to a value falling within the allowable range, in place of setting the operation target value of the seventh actuator 27. Corresponding to the above calculation, in step S16, the operation target values of the actuators 21 to 26, from which the operation target value set in step S15 is excluded, and the operation target value of the seventh actuator 27, may be calculated.

In step S14, when the operation target values are determined to be outputtable, the controller 100 executes step S17. In step S17, whether the construction of the operation patterns has been completed is determined by the controller 100. To be specific, for example, the target acquisition unit 111 determines whether all of the target values of the position/postures necessary for construction of the operation patterns have been acquired. Whether all of the target values of the position/postures have been acquired is determined based on a completion command input to the programming pendant 120 by the user or a completion command read from a recording medium by the programming pendant 120.

In step S17, when the construction of the operation pattern is determined not to have been completed, the controller 100 returns the processing to step S11. Accordingly, steps S11 to S17 are repeated until when the construction of the operation pattern is completed, and the time series data of the operation target values of the actuators 21 to 27 is constructed.

In step S17, when the construction of the operation pattern is determined to have been completed, the controller 100 terminates the processing.

(Operation of Robots)

With the above configuration, the controller 100 controls the robots 10 to be operated in the operation patterns generated in steps S11 to S17. For example, the controller 100 executes controlling the robots 10 to move the end effectors 17 to the plurality of portions to be machined P1 of the workpiece W, and controlling the robots 10 to apply machining to the portions to be machined P1 by the end effectors 17 in the state where the end effectors 17 are arranged in the portions to be machined P1.

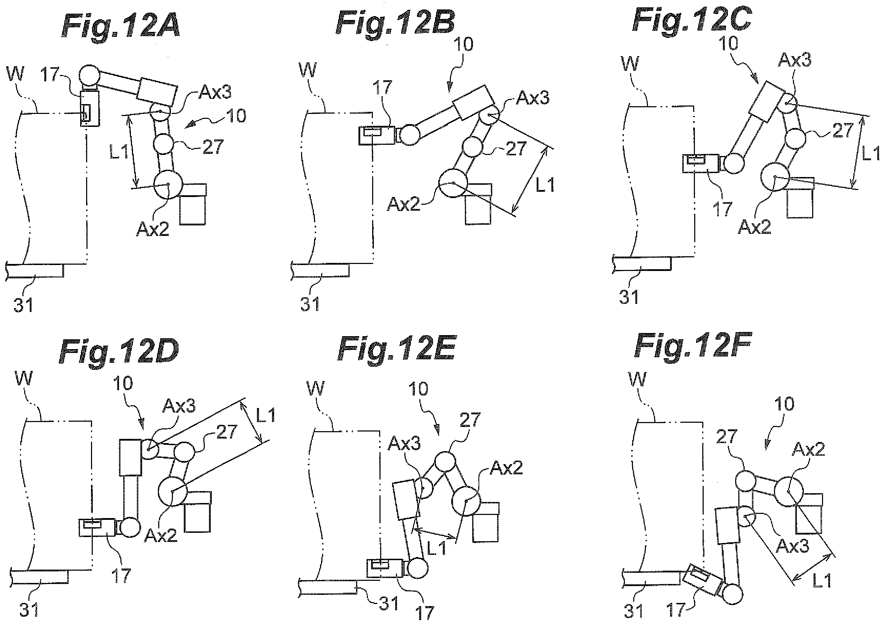

The plurality of portions to be machined PI may include the portion to be machined PI existing at a higher position than the base end portion of the first arm portion 13 and the portion to be machined P1 existing at a lower position than the base end portion of the first arm portion 13. In this case, the controller 100 controls the robot 10 to move the end effector 17 between the position higher than the base end portion of the first arm portion 13 and the position lower than the base end portion in a state where the tip portion of the second arm portion 14 is positioned closer to a side of the workpiece W than the base end portion of the first arm portion 13, as illustrated in FIGS. 12A to 12F.

In this process, the tip portion of the first arm portion 13 may be moved between the position higher than the base end portion of the first arm portion 13 and the position lower than the base end portion. That is, controlling the robot 10 to move the end effector 17 between the position higher than the base end portion of the first arm portion 13 and the position lower than the base end portion may include controlling the robot 10 to move the tip portion of the first arm portion 13 between the position higher than the base end portion of the first arm portion 13 and the position lower than the base end portion.

As described above, the robot 10 is positioned to cause the tip portion DP1 of the first arm portion 13 or the base end portion PP2 of the second arm portion 14 to interfere with the workpiece W when the first arm portion 13 is rotated around the second axis Ax2, where the distance L1 is the longest distance L11, in a state where the robot 10 exactly faces the workpiece W. Therefore, when the end effector 17 is moved between the position higher than the base end portion of the first arm portion 13 and the position lower than the base end portion in the state where the distance L1 is fixed to the longest distance L11, the robot 10 may interfere with the workpiece W. When the tip portion of the first arm portion 13 is moved between the position higher than the base end portion of the first arm portion 13 and the position lower than the base end portion in the state where the distance L1 is fixed to the longest distance L11, the possibility that the robot 10 interferes with the workpiece W is increased.

In contrast, according to steps S11 to S17, the operation patterns of the actuators 21 to 27 are generated to make the distance L1 short to avoid the interference between the robot 10 and the workpiece W. In this case, the controller 100 controls the robot 10 to change the distance L1 between the second axis Ax2 and the third axis Ax3 by the seventh actuator 27 in the process of moving the end effector 17 between the position higher than the base end portion of the first arm portion 13 and the position lower than the base end portion. That is, controlling the robot 10 to move the end effector 17 between the position higher than the base end portion of the first arm portion 13 and the position lower than the base end portion may include controlling the robot 10 to change the distance between the second axis Ax2 and the third axis Ax3 by the seventh actuator 27.

[Effects by First Embodiment]

As described above, according to the machining apparatus 1, when the first arm portion 13 is rotated around the second axis Ax2 where the distance L1 between the second axis Ax2 and the third axis Ax3 is the longest distance L11 in a state where the robot 10 exactly faces the workpiece W, the robot 10 approaches the workpiece W such that the tip portion of the first arm portion 13 or the base end portion of the second arm portion 14 interferes with the workpiece. Therefore, the end effector 17 can easily reach a more distal portion to be machined. Therefore, even if the robot 10 is closely arranged to the workpiece W, the end effector 17 can be moved while avoiding the interference between the robot 10 and the workpiece W by shortening the distance L1 between the second axis Ax2 and the third axis Ax3 by the seventh actuator 27. Therefore, achievement of both of an increase in a reaching range by the close arrangement, and an increase in the movable range by the avoidance of interference is ensured, and machining can be applied to the workpiece W in a wide range with the individual robot 10.

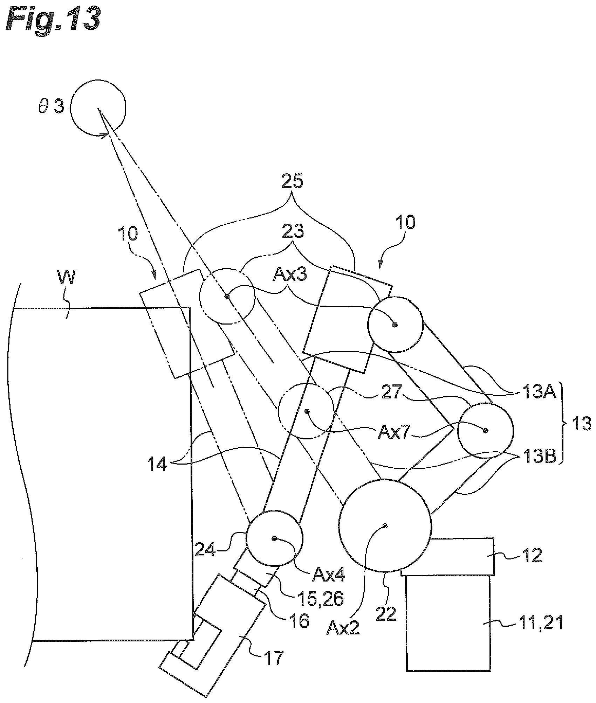

FIG. 13 is a diagram exemplarily illustrating an action of the seventh actuator 27. The robot 10 illustrated by the two-dot chain line in FIG 13 illustrates a case in which the end effector 17 is arranged to the portion to be machined without bending the first arm portion 13. The robot 10 illustrated by the two-dot chain line interferes with the workpiece W. In contrast, the robot 10 illustrated by the solid line illustrates a case in which the seventh actuator 27 is moved to bend the first arm portion 13 to make the distance between the second axis Ax2 and the third axis Ax3 short. In the robot 10 illustrated by the solid line, the portion between the fourth axis Ax4 and the second axis Ax2 is separated from the workpiece W in a state where the position/posture of the tip portion 16 is maintained, and the interference of the robot 10 to the workpiece W is prevented.

The robot 10 may be positioned to cause the tip portion of the first arm portion 13 and the base end portion of the second arm portion 14 not to interfere with the workpiece W when the first arm portion 13 is rotated around the second axis Ax2, where the distance L1 is the shortest distance L12, in a state where the robot 10 exactly faces the workpiece W. In this case, the interference between the robot 10 and the workpiece W can be more reliably avoided. Therefore, achievement of both of the increase in the reaching range by the close arrangement and the increase in the movable range by the avoidance of the interference can be more reliably ensured.

A controller 100 may be further included, which controls the robot 10 to move the end effector 17 between the position higher than the base end portion of the first arm portion 13 and the position lower than the base end portion in the state where the tip portion of the second arm portion 14 is positioned closer to the side of the workpiece W than the base end portion of the first arm portion 13. In this case, machining can be applied to the workpiece W in a wide range with the individual robot 10 by effective use of the configuration that enables achievement of both of the increase in the reaching range by the close arrangement and the increase in the movable range by the avoidance of the interference.

Controlling the robot 10 to move the end effector 17 between the position higher than the base end portion of the first arm portion 13 and the position lower than the base end portion may include controlling the robot 10 to move the tip portion of the first arm portion 13 between the position higher than the base end portion of the first arm portion 13 and the position lower than the base end portion. In this case, machining can be applied to the workpiece W in a wide range with the individual robot 10 by more effective use of the configuration that enables achievement of both of the increase in the reaching range by the close arrangement and the increase in the movable range by the avoidance of the interference.

Controlling the robot 10 to move the end effector 17 between the position higher than the base end portion of the first arm portion 13 and the position lower than the base end portion may include controlling the robot 10 to change the distance L1 between the second axis Ax2 and the third axis Ax3 by the seventh actuator 27. In this case, machining can be applied to the workpiece in a wide range with an individual robot by reliable use of the configuration that enables achievement of both of the increase in the reaching range by the close arrangement and the increase in the movable range by the avoidance of the interference.

The plurality of posture adjustment actuators includes the fourth actuator 24 that swings the wrist portion 15 around the fourth axis Ax4, and the robot 10 may be positioned such that both of the distance from the highest portion to be machined in the workpiece W to the base end PE1 of the first arm portion 13, and the distance from the lowest portion to be machined in the workpiece W to the base end PE1 of the first arm portion 13 become the length La obtained by the formula (1) or less, in a state where the robot 10 exactly faces the workpiece W. In this case, the end effector 17 can be arranged to both of the highest portion to be machined and the lowest portion to be machined in the workpiece W. Therefore, machining can be applied to a wider range with the individual robot 10.

The robot 10 may be positioned such that a distance from a position to the base end PE1 of the first arm portion 13, the position being obtained such that the highest portion to be machined in the workpiece W is shifted upward by a distance equal to the distance from the fourth axis Ax4 to the end effector 17, and a distance from a position to the base end PE1 of the first arm portion 13, the position being obtained such that the lowest portion to be machined in the workpiece W is shifted downward by a distance equal to the distance from the fourth axis Ax4 to the end effector 17 become the length Lb obtained by the formula (2) or less in a state where the robot 10 exactly faces the workpiece W. In this case, the end effector 17 can be arranged to both of the highest portion to be machined and the lowest portion to be machined in the workpiece W, in more various postures. Therefore, machining can be applied to a wider range with the individual robot 10.

The robot 10 may be positioned to cause the height of the base end PE1 of the first arm portion 13 to become the height Ha obtained by the formula (3) or more. In this case, the end effector 17 can be arranged to the highest portion to be machined in the workpiece W in more various postures. Therefore, machining can be applied to a wider range with the individual robot 10.

The robot 10 may be positioned to cause the height of the base end PE1 of the first arm portion 13 to become the height Hb obtained by the formula (4) or less. In this case, the end effector 17 can be arranged to both of the highest portion to be machined and the lowest portion to be machined in the workpiece W in more various postures. Therefore, machining can be applied to the workpiece W in a wider range with the individual robot 10.

The conveyance device 30 that conveys at least one of the workpiece W and the robot 10 may be further included so that a relative position of the workpiece W and the robot 10 is changed when the robot 10 executes machining to the workpiece W. In this case, the tip portion 16 can be appropriately arranged to the portions to be machined in a wide range, by causing the conveyance device 30 and the robot 10 to be in cooperation with each other. Meanwhile, the relative arrangement of the workpiece W and the robot 10 is changed. Therefore, easiness of generation of the interference of the robot 10 with the workpiece W is changed. In contrast, the robot 10 further includes the seventh actuator 27 for distance adjustment, in addition to the actuators 21 to 26 that adjusts the position/posture of the tip portion 16. Therefore, the posture of the robot 10 between the base 11 and the tip portion 16 can be freely changeable in a state where the position/posture of the tip portion 16 is maintained. Accordingly, the mutual interference can be suppressed flexibly corresponding to the change of the relative arrangement between the workpiece W and the robot 10. The characteristic of easiness of avoidance of the workpiece W provides many options of the arrangement of the robot 10. Therefore, easy construction of a production facility becomes possible.

Further, flexible change of the posture of the robot 10 suppresses the interference of the robot 10 with surrounding devices. Therefore, arrangement of the robots 10 in high density can shorten work time.

The robot 10 may be arranged to be able to apply machining to all of the portions to be machined from the robot side without interfering with the workpiece W. In this case, one robot 10 can apply machining to all of the portions to be machined from the robot 10 side, or a plurality of the robots 10 is arranged to the same one side, and all of the portions to be machined can be shared by these robots 10. Accordingly, flexible construction of the production facility in accordance with the production amount becomes possible. Note that arrangement of the robots 10 to enable machining to all of the portions to be machined is not essential.

The conveyance device 30 may convey the workpiece W. In this case, the configuration of the conveyance device 30 can be more easily simplified than a case where the robot 10 with a large number of power sources is conveyed. Therefore, easier construction of the production facility becomes possible. Note that the conveyance device 30 may just be one that changes the relative position between the workpiece W and the robot 10. Therefore, the conveyance device 30 may be one that conveys the robot 10, or one that conveys both of the workpiece W and the robot 10.

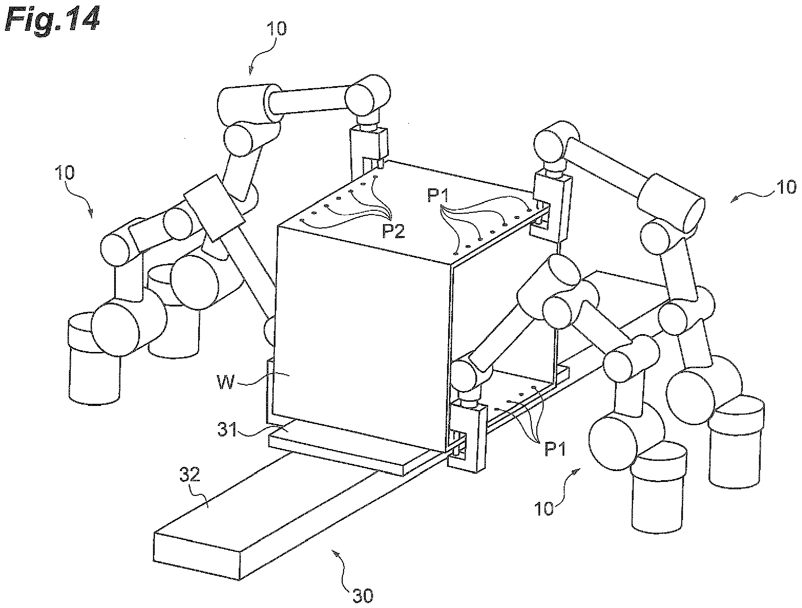

The machining apparatus 1 may include a plurality of the robots 10 arranged along the conveying direction of the conveyance device 30, as illustrated in FIG. 14. Each of the robots 10 arranged along the conveying direction can apply machining to the portion to be machined in a wide range. Therefore, the portions to be machined can be allocated to the plurality of robots 10 arranged along the conveying direction in various patterns, and a more efficient production facility can be constructed.

FIG. 14 illustrates two robots 10 arranged along the conveying direction of the conveyance device 30. However, an embodiment is not limited to the example, and the machining apparatus 1 may include three or more robots 10 arranged along the conveying direction of the conveyance device 30.

The machining apparatus 1 may include the plurality of robots 10 arranged to sandwich the workpiece W in a direction perpendicular to the conveying direction of the conveyance device 30. In this case, all of the portions to be machined are shared by the plurality of robots 10, so that the operation amount of each robot 10 can be suppressed. Accordingly, the interference of the robot 10 with the workpiece W is further suppressed. Further, the arrangement to sandwich the workpiece W in the direction perpendicular to the conveying direction of the conveyance device 30 suppresses the interference between the robots 10. Therefore, easier construction of the production facility becomes possible.

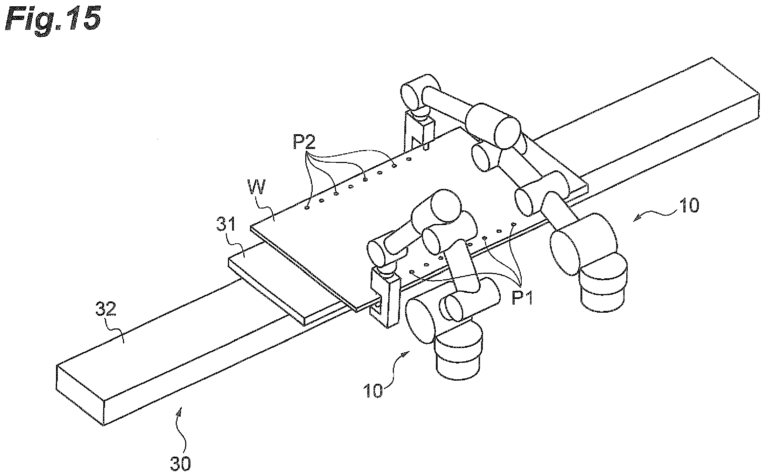

Arrangement of the plurality of robots 10 to sandwich the workpiece W in the direction perpendicular to the conveying direction of the conveyance device 30 is not essential. For example, as illustrated in FIG. 15, the robots 10 may be arranged only on the left side of the workpiece W. In this case, the robots 10 may be arranged to be able to apply machining to all of the portions to be machined from the side of the robots 10 without interfering with the workpiece W. For example, in FIG. 15, the robots 10 may be arranged to be able to apply machining to both of all of the portions to be machined PI on the left side and all of the portions to be machined PI on the right side.

FIG. 15 illustrates two robots 10 arranged along the conveying direction of the conveyance device 30. However, an embodiment is not limited to the example, and the machining apparatus 1 may include only one robot 10.

The controller 100 may include the target acquisition unit 111, the first calculation unit 112, the determination unit 113, the second calculation unit 114, and the output unit 115. The target acquisition unit 111 acquires the target values of the position/posture of the tip portion 16. The first calculation unit 112 calculates the operation target values of the actuators 21 to 26 corresponding to the target values of the position/posture in the condition where the operation target value of the seventh actuator 27 for distance adjustment is fixed. The determination unit 113 determines whether the operation target value of the actuator to be determined falls within the allowable range, where at least any of the actuators 21 to 26 is the actuator to be determined. The second calculation unit 114 calculates the operation target values of the actuators 21 to 26 and the seventh actuator 27 for distance adjustment corresponding to the target values of the position/posture such that the operation target value of at least one actuator to be determined falls inside the allowable range when the operation target value falls outside the allowable range. The output unit 115 controls the actuators 21 to 27 in accordance with the operation target values.

As described above, according to the robot 10, while the interference can be suppressed, the operation target values of the actuators 21 to 27 corresponding to the target values of the position/posture of the tip portion 16 are not determined to one set. Therefore, it is necessary to appropriately set some sort of constraint condition in an instruction of the operation of the robot 10.

In contrast, the controller 100 first calculates the operation target values of the actuators 21 to 26 in the condition where the operation target value of the seventh actuator 27 is fixed. Next, the controller 100 automatically re-calculates the operation target values of the actuators 21 to 26 and the seventh actuator 27 for distance adjustment when the operation target value of the actuator to be determined falls outside the allowable range. When the operation amounts of the actuators of the robot 10 are suppressed to fall within the allowable range, the operation amount of the entire robot 10 is also suppressed. Therefore, the robot 10 tends to less easily cause the interference with the workpiece W or surrounding devices.

For example, in the robot 10 illustrated by the two-dot chain line in FIG 13, the operation target value of the third actuator 23 falls outside the allowable range. That is, the target value $\theta 3$ of the swing angle of the second arm portion 14 with respect to the first arm portion 13 is excessive. In contrast, in the robot 10 illustrated by the solid line in FIG. 13, the operation target values of the actuators 21 to 26 and the seventh actuator 27 for distance adjustment are re-calculated to reduce the target value $\theta 3$ of the swing angle of the second arm portion 14 with respect to the first arm portion 13. With the reduction, the portion between the fourth axis Ax4 and the second axis Ax2 is separated from the workpiece W, and the interference of the robot 10 with the workpiece W is prevented.

As described above, employment of the condition that the operation target value of the actuator to be determined is suppressed to fall within the allowable range can reduce a probability of occurrence of the interference with the workpiece W or the surrounding devices. Accordingly, most of the operation pattern with which the tip portion 16 is appropriately arranged near each portion to be machined can be automatically constructed while avoiding the interference with the workpiece W or the surrounding devices. Therefore, a burden of an instruction of the operation to the robot 10 is reduced, and easier construction of the production facility becomes possible.

The seventh actuator 27 for distance adjustment adjusts the distance L1 between the second axis Ax2 and the third axis Ax3 by bending the first arm portion 13 around the seventh axis Ax7 for distance adjustment. In this case, the operation amounts of the actuators 21 to 26 tend to be easily suppressed than a case where the first arm portion 13 is simply expanded/contracted and the distance L1 between the second axis Ax2 and the third axis Ax3 is adjusted. Further, the posture of the robot 10 can be adjusted in more various ways, and the workpiece W or the surrounding devices tend to be easily avoided. Therefore, easier construction of the production facility becomes possible. Note that the seventh actuator 27 may be any actuator as long as the actuator can adjust the distance L1 between the second axis Ax2 and the third axis Ax3. Therefore, for example, the seventh actuator 27 may be a linear actuator that expands/contracts the first arm portion 13.

The seventh axis Ax7 for distance adjustment is parallel to the second axis Ax2. If a robot with the seventh axis Ax7 that is perpendicular to the second axis Ax2 is used, it may be necessary to largely incline portions corresponding to the first arm portion 13 and the second arm portion 14 to a side (a side of a case where the workpiece W side is the front) in order to arrange the tip portion 16 to desired position/posture while avoiding the interference of the robot with the workpiece W. Accordingly, interference with the surrounding devices (for example, with adjacent another robot) may be caused. Therefore, it is necessary to increase an arrangement interval between the robot and the surrounding device. This becomes a case to hinder high-density arrangement of a plurality of robots, for example. In contrast, the seventh axis Ax7 is parallel to the second axis Ax2 in the robot 10. Therefore, it is less likely to cause a necessity to incline the first arm portion 13 and the second arm portion 14 to a side due to at least the rotation operation around the seventh axis Ax7, and the interference with the adjacent surrounding device is less likely to occur. Therefore, options of arrangements of the robot 10 are increased, and easier construction of the production facility becomes possible. The plurality of robots can be arranged in a higher density, and work time can be shortened. Note that it is not essential that the seventh axis Ax7 is parallel to the second axis Ax2.

The seventh axis Ax7 for distance adjustment is also parallel to the third axis. In this case, it is further less necessary to incline the first arm portion 13 and the second arm portion 14 to a side when arranging the tip portion 16 to desired position/posture. Therefore, easier construction of the production facility further becomes possible. The plurality of robots can be arranged in higher density, and the work time can be further shortened. Note that it is not essential that the seventh axis Ax7 is parallel to the third axis Ax3.

The second calculation unit 114 may calculate the operation target values of the actuators 21 to 27 to bend the first arm portion 13 in the direction into which the seventh axis Ax7 for distance adjustment is away from the workpiece W. That is, the controller 100 may control the actuators 21 to 27 to bend the first arm portion 13 in the direction into which the seventh axis Ax7 is away from the workpiece W. In this case, the interference of the robot 10 with the workpiece W and the adjacent surrounding device is more reliably suppressed.

The plurality of posture adjustment actuators that adjusts the posture of the tip portion 16 includes the fifth actuator 25 that rotates the wrist portion 15 around the fifth axis Ax5, the fourth actuator 24 that swings the wrist portion 15 around the fourth axis Ax4, and the sixth actuator 26 that rotates the tip portion 16 around the sixth axis Ax6. In this case, the posture of the tip portion 16 can be freely adjusted by the cooperation of the actuators 24 to 26. Note that the plurality of posture adjustment actuators is not limited to the actuators 24 to 26, and any actuators may be employed as long as the actuators can adjust the posture of the tip portion 16. For example, any of the fourth actuator 24, the fifth actuator 25, and the sixth actuator 26 may be omitted in accordance with the degree of adjustment of the necessary posture.

The determination unit 113 may use at least one of the second actuator 22, the third actuator 23, and the fourth actuator 24 as the actuator to be determined. The operation amounts of these actuators tend to easily correlate with the operation amount of the entire robot. Therefore, these actuators are used as the actuators to be determined, and operation ranges thereof are suppressed to fall within an allowable range, so that the operation amount of the entire robot 10 is more reliably suppressed, and the interference can be further suppressed.

The determination unit 113 may use at least one of the third actuator 23 and the fourth actuator 24 as the actuator to be determined. The operation amounts of these actuators tend to easily correlate with the operation amount of the entire robot. Therefore, these actuators are used as the actuators to be determined, and the operating ranges thereof are suppressed to fall within the allowable range, so that the operation amount of the entire robot 10 can be more reliably suppressed, and the interference can be further suppressed.

The robot 10 may further include a welding device provided to the tip portion 16, as the end effector 17. In this case, welding can be performed to the portions to be machined in a wide range while suppressing the interference of the robot 10 with the workpiece W or the surrounding devices.

According to the machining apparatus 1, the method of producing the workpiece W, the method including arrangement of the workpiece W on the pallet 31 to enable the robot 10 to perform machining to the workpiece W, conveyance of the pallet 31 by the conveyance actuator 32 to change the relative position between the workpiece W and the robot 10, and application of machining to the workpiece W with the robot 10, can be executed.

Further, the method of producing the workpiece W, the method including acquisition of the target values of the position/posture of the tip portion 16, calculation of the operation target values of the actuators 21 to 26 corresponding to the target values of the position/posture in the condition where the operation target value of the seventh actuator 27 is fixed, determination of whether the operation target value of the actuator to be determined fall within the allowable range where at least one of the actuators 21 to 26 is the actuator to be determined, calculation of the operation target values of the actuators 21 to 27 corresponding to the target values of the position/posture to cause the operation target value to fall within the allowable range when the operation target value of at least one actuator to be determined falls outside the allowable range, and controlling the actuators 21 to 27 in accordance with the operation target values, can be executed.

The instruction method including an input of the target values of the position/posture to the controller 100, and storage of the operation target values of the actuators 21 to 27 calculated by the controller 100 to correspond to the target values of the position/posture to the controller can be executed.

2. Second Embodiment

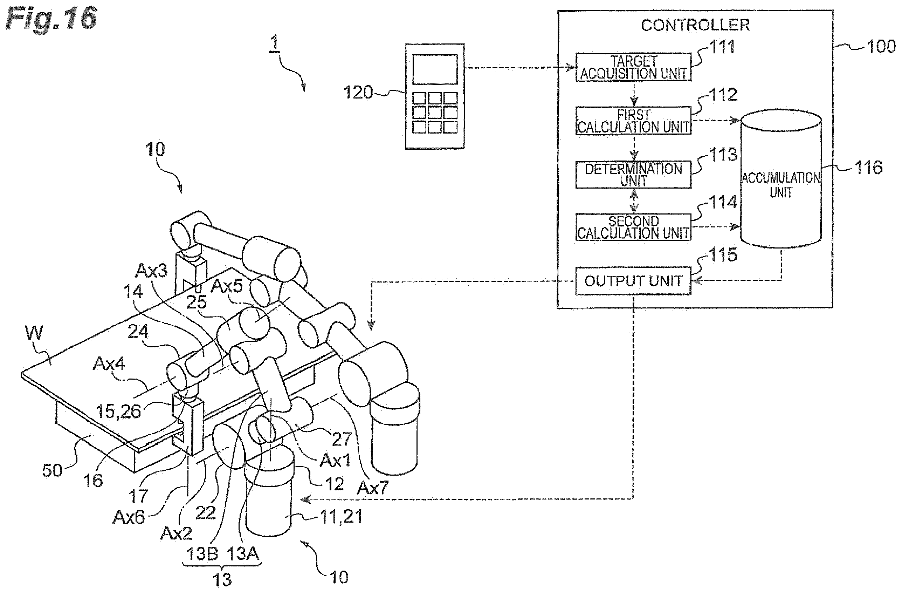

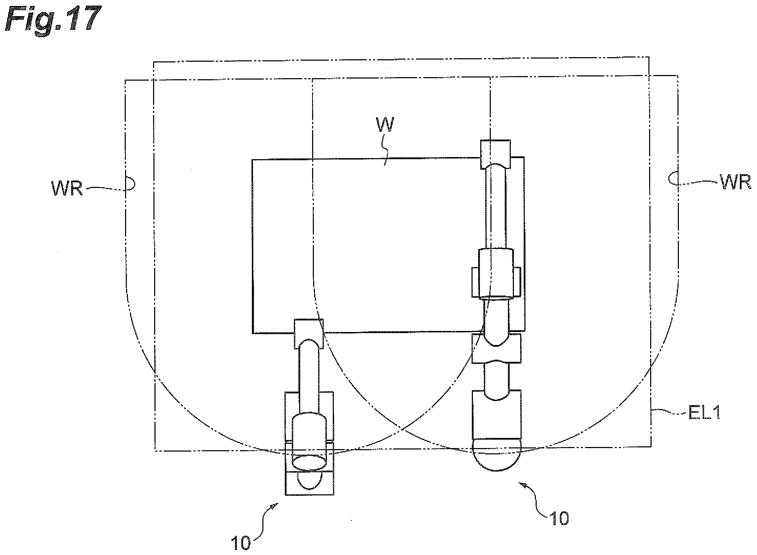

As illustrated in FIG. 16, a machining apparatus 1 according to the second embodiment is an apparatus in which the conveyance device 30 of the machining apparatus 1 according to the first embodiment is replaced with a holding table 50 (workpiece arranging portion). The holding table 50 holds a workpiece W in a position where robots 10 can perform machining. As illustrated in FIG. 17, two robots 10 are arranged along a line EL1 that surrounds the workpiece W, and apply machining to the same workpiece W in cooperation with each other. Note that, although the "line that surrounds the workpiece W" does not necessarily extend along a peripheral edge of the workpiece W, the "line that surrounds the workpiece W" does not include a line perpendicular to the peripheral edge of the workpiece W. The robot 10 is arranged such that a movable range WR overlaps with that of another adjacent robot 10. An arrangement condition for the individual robot 10 and the workpiece W is similar to the first embodiment.

[Effects by Second Embodiment]

As described above, the machining apparatus 1 includes a plurality of robots including the robots 10 and applying machining to the same workpiece in cooperation with each other. The robots 10 are included in the plurality of robots that applies machining to the same workpiece W, whereby interference of the robot with the workpiece W and interference between the robots can be suppressed. Therefore, easy construction of a production facility becomes possible. Arrangement of the plurality of robots in high density can shorten work time.

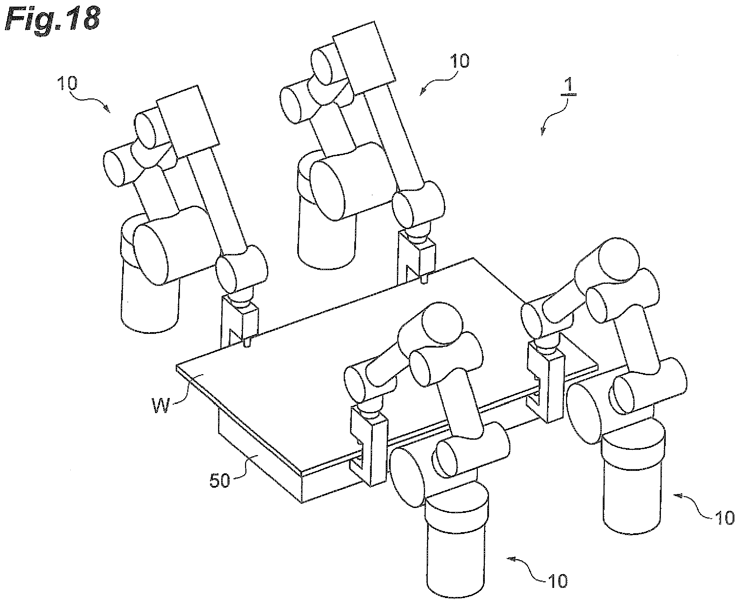

The machining apparatus 1 may just include the plurality of robots that applies machining to the same workpiece W. Therefore, the number of robots is not limited to two. For example, as illustrated in FIG. 18, the machining apparatus 1 may include three or more robots. The machining apparatus 1 of FIG. 18 includes four robots 10. The four robots 10 are arranged to surround the workpiece W along the line surrounding the workpiece W.

In the machining apparatus 1 of FIGS. 16 and 18, all of the plurality of robots are the robots 10. Therefore, a posture of the robot between a base 11 and a tip portion 16 is freely changeable in a state where the position/posture of the tip portion 16 is maintained in all of the robots. Therefore, the interference of the robots with the workpiece W and the interference between the robots can be more reliably suppressed.

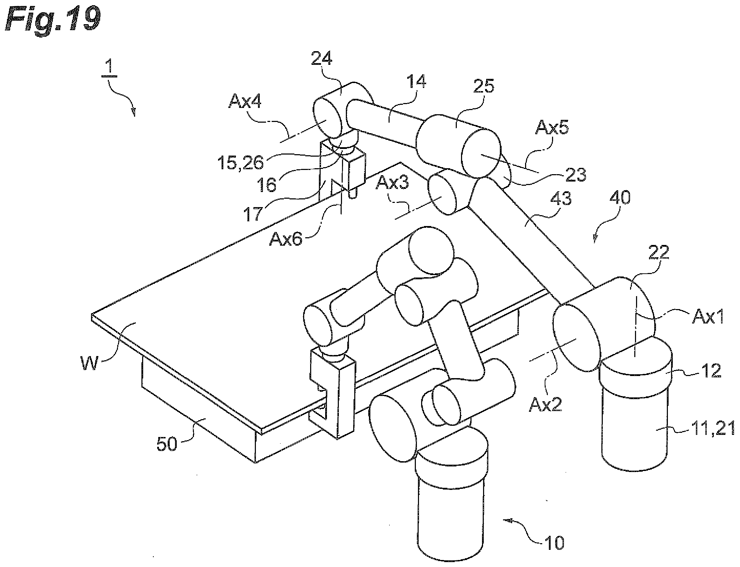

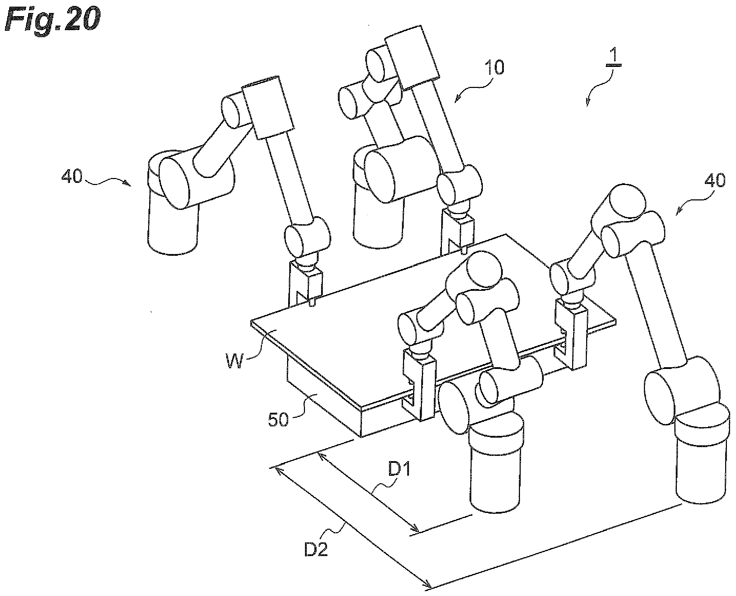

Note that it is not essential that all of the robots are the robots 10. For example, as illustrated in FIGS. 19 and 20, a plurality of robots in the machining apparatus 1 may further include a robot 40 (second robot). The robot 40 includes actuators 21 to 26, and does not include a seventh actuator 27 for distance adjustment. The robot 40 is a robot in which the first arm portion 13 and the seventh actuator 27 are replaced with a first arm portion 43. With such a configuration, the robot 10 is included in the plurality of robots, and thus can obtain the effect to suppress the interference of the robot with the workpiece W and the interference between the robots. The number of the robots is not limited. Therefore, the machining apparatus 1 may include two robots as illustrated in FIG. 19, or may include three or more as illustrated in FIG. 20.

The robot 10 and the robot 40 may be arranged to adjacent to each other. In this case, the interference between the robots can be more reliably suppressed.

As illustrated in FIG 19, the machining apparatus 1 may be configured such that the robot 10 applies machining to a more proximal side of the workpiece W than the robot 40. When performing the machining to the proximal side of the workpiece W, the robot takes a posture in which the arm is folded. In such a posture, the operation amount of some of the actuators tends to easily reach the allowable limit. Further, the folded arm tends to easily interfere with the workpiece W or another robot. Therefore, allocation of the machining to the proximal side of the workpiece W to the robot 10, which can suppress the interference, can more reliably suppress the interference of the robot with the workpiece W and the interference between the robots.

As illustrated in FIG 20, the machining apparatus 1 may be configured such that the robot 10 is positioned closer to the workpiece W than the robot 40. That is, a distance D1 from the base 11 of the robot 10 to the workpiece W may be smaller than a distance D2 from the robot 40 to the workpiece W. In this case, arranging the robot 10, which can suppress the interference, closer to the workpiece W enables the end effector 17 to reach the workpiece W in a wide range. Accordingly, the portion that cannot be machined by the robot 40 is covered by the robot 10, and the machining can be applied to the workpiece W in a wide range.

All of the robots are fixed to the installation surface, and the robot 10 may be arranged to have the movable range overlap with adjacent another robot. In this case, an effect of suppression of interference by the robot 10 becomes more remarkable.

The embodiments have been described. However, the present invention is not necessarily limited to the above-described embodiments, and various changes can be made without departing from the scope of the invention as defined by the appended claims. For example, the workpiece W of the machining apparatus 1 is not limited to a body of an automobile. The machining apparatus 1 is applicable to machining of a door panel of an automobile, and the like, and is also applicable to machining/assembly of various parts and products in technical fields other than automobiles.

**Industrial Applicability**

The present disclosure can be used for machining apparatuses.

**Reference Signs List**

| | |
|---|---|
| 1 | Machining apparatus |
| 10 | Robot (first robot) |
| 12 | Rotating portion |
| 13 | First arm portion |
| 14 | Second arm portion |
| 15 | Wrist portion |
| 16 | Tip portion |
| 17 | End effector (welding device) |
| 21 | First actuator |
| 22 | Second actuator |
| 23 | Third actuator |
| 24 | Fourth actuator (posture adjustment actuator) |
| 25 | Fifth actuator (posture adjustment actuator) |
| 26 | Sixth actuator (posture adjustment actuator) |
| 27 | Seventh actuator (distance adjustment actuator) |
| 30 | Conveyance device |
| 40 | Robot (second robot) |
| 100 | Controller |
| Ax1 | First axis |
| Ax2 | Second axis |
| Ax3 | Third axis |
| Ax4 | Fourth axis |
| Ax5 | Fifth axis |
| Ax6 | Sixth axis |
| Ax7 | Seventh axis (distance adjustment axis) |
| L1 | Distance between second axis and third axis |
| P1 and P2 | Portion to be machined |
| W | Workpiece |
| L11 | Longest distance |

L12          Shortest distance
PE1          Base end of first arm portion 13
DP1          Tip portion of first arm portion 13
PP2          Base end portion of second arm portion 14
WR           Movable range

**Claims**

1. A method of producing a workpiece, (W) using a processing apparatus (1) including:

   a first robot (10) including
   a rotating portion (12), a first arm portion (13), a second arm portion (14), a wrist portion (15), and a tip portion (16) mutually connected in series,
   a first actuator (21) configured to rotate the rotating portion (12) around a first axis (Ax1),
   a second actuator (22) configured to swing the first arm portion (13) around a second axis (Ax2),
   a third actuator (23) configured to swing the second arm portion (14) around a third axis (Ax3),
   a plurality of posture adjustment actuators (24, 25, 26) configured to adjust a posture of the tip portion (16), wherein the plurality of posture adjustment actuators (24, 25, 26) includes a fourth actuator (24) configured to swing the wrist portion (15) around a fourth axis (Ax4), a fifth actuator (25) configured to rotate the wrist portion (15) around a fifth axis (Ax5), and a sixth actuator (26) configured to rotate the tip portion (16) around a sixth axis (Ax6),
   a distance adjustment actuator (27) configured to adjust a distance (L1) between the second axis (Ax2) and the third axis (Ax3), and
   an end effector (17) provided to the tip portion (16) and configured to apply processing to a workpiece (W),
   **characterised in that**
   the first robot (10) is positioned such that a tip portion (DP1) of the first arm portion (13) or a base end portion (PP2) of the second arm portion (14) interferes with the workpiece (W) when the workpiece (W) is placed at a position set for the first robot (10) to process the workpiece (W) and the first arm portion (13) is rotated around the second axis (Ax2), where the distance (L1) is made longest, in a state where the first robot (10) exactly faces the workpiece (W), and in which the first robot (10) is positioned such that the tip portion (DP1) of the first arm portion (13) and the base end portion (PP2) of the second arm portion (14) do not interfere with the workpiece (W) when the first arm portion (13) is rotated around the second axis (Ax2), where the distance (L1) is made shortest, in a state where the first robot (10) exactly faces the workpiece (W),
   the method comprising:

   controlling the first robot (10) to move the end effector (17) to a plurality of portions to be processed of the workpiece (W); and
   controlling the first robot (10) to apply processing to the portion to be processed with the end effector (17) in a state where the end effector (17) is arranged to the portion to be processed,
   wherein controlling the first robot (10) to move the end effector (17) to a plurality of portions to be processed of the workpiece (W) includes moving of the end effector (17) between a position higher than a base end (PE1) of the first arm portion (13) and a position lower than the base end (PE1) of the first arm portion (13) while changing the distance (L1) between the second axis (Ax2) and the third axis (Ax3) with the distance adjustment actuator (27).

2. The method according to claim 1, wherein the processing apparatus further comprises:
   a controller (100) configured to control the first robot (10) to move the end effector (17) between a position higher than a base end portion (PE1) of the first arm portion (13) and a position lower than the base end portion (PE1) of the first arm portion (13), in a state where a tip portion of the second arm portion (14) is positioned closer to a side of the workpiece (W) than the base end portion (PE1) of the first arm portion (13).

3. The method according to claim 2, wherein controlling the first robot (10) to move the end effector (17) between the position higher than the base end portion (PE1) of the first arm portion (13) and the position lower than the base end portion (PE1) of the first arm portion (13) includes controlling the first robot (10) to move the tip portion (DP1) of the first arm portion (13) between the position higher than the base end portion (PE1) of the first arm portion (13) and the position lower than the base end portion (PE1) of the first arm portion (13).

4. The method according to claim 2 or 3, wherein controlling the first robot (10) to move the end effector (17) between the position higher than the base end portion (PE1) of the first arm portion (13) and the position lower than the base end portion (PE1) of the first arm portion (13) includes controlling the first robot (10) to change the distance (L1) between the second axis (Ax2) and the third axis (Ax3) with the distance adjustment actuator (27).

5. The method according to any one of claims 1 to 4, wherein
the first robot (10) is positioned such that a distance from a highest portion to be machined in the workpiece (W) to the base end (PE1) of the first arm portion (13), and a distance from a lowest portion to be machined in the workpiece (W) to the base end (PE1) of the first arm portion (13) become a length La obtained by a formula (1) or less, in a state where the first robot (10) exactly faces the workpiece (W).

$$La = L11 + L21 + L31 \quad ... \quad (1)$$

L11: a longest distance from the second axis (Ax2) to the third axis (Ax3)
L21: a distance from the third axis (Ax3) to the fourth axis (Ax4)
L31: a distance from the fourth axis (Ax4) to the end effector (17)

6. The method according to claim 5, wherein the first robot (10) is positioned such that a distance from a position of the fourth axis (Ax4) to the base end (PE1) of the first arm portion (13) when the end effector (17) is arranged to be able to apply processing to the highest portion to be processed in the workpiece (W), and a distance from the position of the fourth axis (Ax4) to the base end (PE1) of the first arm portion (13) when the end effector (17) is arranged to be able to apply processing to the lowest portion to be processed in the workpiece (W) become a length Lb obtained by a formula (2) or less, in a state where the first robot (10) exactly faces the workpiece (W).

$$Lb = L11 + L21 \quad ... \quad (2)$$

7. The method according to claim 5 or 6, wherein the first robot (10) is positioned such that a distance from the position of the fourth axis (Ax4) to the base end (PE1) of the first arm portion (13) when the wrist portion (15) is oriented downward in a vertical direction and the end effector (17) is arranged to the highest portion to be processed in the workpiece (W), and a distance from the position of the fourth axis (Ax4) to the base end (PE1) of the first arm portion (13) when the wrist portion (15) is oriented upward in the vertical direction and the end effector (17) is arranged to the lowest portion to be processed in the workpiece (W) become the length Lb obtained by the formula (2) or less, in a state where the first robot (10) exactly faces the workpiece (W).

$$Lb = L11 + L21 \quad ... \quad (2)$$

8. The method according to claim 7, wherein the first robot (10) is positioned such that a height of the base end (PE1) of the first arm portion (13) becomes a height Ha obtained by a formula (3) or more.

$$Ha = HH - L21 \cdot \cos\theta - L11 \quad ... \quad (3)$$

HH: a height of the fourth axis (Ax4) when the wrist portion (15) is oriented downward in the vertical direction and the end effector (17) is arranged to the highest portion to be processed in the workpiece (W)
θ: a minimum value of an angle made by a straight line perpendicular to the third axis (Ax3) and the fourth axis (Ax4), and a central axis of the wrist portion (15)

9. The method according to claim 8, wherein the first robot (10) is positioned such that the height of the base end (PE1) of the first arm portion (13) becomes a height Hb obtained by a formula (4) or less.

$$Hb = HL + L21 \cdot \cos\theta + L11 \quad ... \quad (4)$$

HL: the height of the fourth axis (Ax4) when the wrist portion (15) is oriented upward in the vertical direction and the end effector (17) is arranged to the lowest portion to be processed in the workpiece (W)

**10.** The method according to claim 9, wherein the first robot (10) is positioned such that a distance from a position to the base end (PE1) of the first arm portion (13), the position being obtained such that the position of the fourth axis (Ax4) when the wrist portion (15) is oriented downward in the vertical direction and the end effector (17) is arranged to the highest portion to be processed in the workpiece (W) is shifted to a front side by a distance Lc obtained by a formula (5), and is shifted downward by a height Hc obtained by a formula (6), and a distance from a position to the base end (PE1) of the first arm portion (13), the position being obtained such that the position of the fourth axis (Ax4) when the wrist portion (15) is oriented upward in the vertical direction and the end effector (17) is arranged to the lowest portion to be processed in the workpiece (W) is shifted to a front side by the distance Lc obtained by the formula (5), and is shifted by the height Hc obtained by the formula (6) become a longest distance from the second axis (Ax2) to the third axis (Ax3) or less, in a state where the first robot (10) exactly faces the workpiece (W).

$$Lc = L21 \cdot \sin\theta \quad \ldots \quad (5)$$

$$Hc = L21 \cdot \cos\theta \quad \ldots \quad (6)$$

**Patentansprüche**

**1.** Verfahren zum Herstellen eines Werkstücks (W) unter Verwendung einer Bearbeitungsvorrichtung (1), welche aufweist:

einen ersten Roboter (10), welcher aufweist:

einen Drehung-Abschnitt (12), einen ersten Armabschnitt (13), einen zweiten Armabschnitt (14), einen Handgelenkabschnitt (15) und einen Spitzenabschnitt (16), welche miteinander in Reihe verbunden sind, einen ersten Aktuator (21), welcher konfiguriert ist, um den Drehung-Abschnitt (12) um eine erste Achse (Ax1) zu drehen, einen zweiten Aktuator (22), welcher konfiguriert ist, um den ersten Armabschnitt (13) um eine zweite Achse (Ax2) zu schwenken, einen dritten Aktuator (23), welcher konfiguriert ist, um den zweiten Armabschnitt (14) um eine dritte Achse (Ax3) zu schwenken, eine Mehrzahl von Pose-Einstellung-Aktuatoren (24, 25, 26), welche konfiguriert sind, um eine Pose des Spitzenabschnitts (16) einzustellen, wobei die Mehrzahl von Pose-Einstellung-Aktuatoren (24, 25, 26) aufweist: einen vierten Aktuator (24), welcher konfiguriert ist, um den Handgelenkabschnitt (15) um eine vierte Achse (Ax4) zu schwenken, einen fünften Aktuator (25), welcher konfiguriert ist, um den Handgelenkabschnitt (15) um eine fünfte Achse (Ax5) zu drehen, und einen sechsten Aktuator (26), welcher konfiguriert ist, um den Spitzenabschnitt (16) um eine sechste Achse (Ax6) zu drehen, einen Abstand-Einstellung-Aktuator (27), welcher konfiguriert ist, um einen Abstand (L1) zwischen der zweiten Achse (Ax2) und der dritten Achse (Ax3) einzustellen, und einen Endeffektor (17), welcher an dem Spitzenabschnitt (16) bereitgestellt ist und konfiguriert ist, um eine Bearbeitung an einem Werkstück (W) auszuführen, **dadurch gekennzeichnet, dass**: der erste Roboter (10) derart positioniert ist, dass ein Spitzenabschnitt (DP1) des ersten Armabschnitts (13) oder ein Basis-Ende-Abschnitt (PP2) des zweiten Armabschnitts (14) mit dem Werkstück (W) wechselwirkt, wenn das Werkstück (W) an einer Position platziert wird, welche für den ersten Roboter (10) festgelegt ist, um das Werkstück (W) zu bearbeiten, und der erste Armabschnitt (13) um die zweite Achse (Ax2) gedreht wird, wobei der Abstand (L1) am längsten gemacht wird, in einem Zustand, in welchem der erste Roboter (10) dem Werkstück (W) genau zugewandt ist, und wobei der erste Roboter (10) derart positioniert ist, dass der Spitzenabschnitt (DP1) des ersten Armabschnitts (13) und der Basis-Ende-Abschnitt (PP2) des zweiten Armabschnitts (14) nicht mit dem Werkstück (W) wechselwirken, wenn der erste Armabschnitt (13) um die zweite Achse (Ax2) gedreht wird, wobei der Abstand (L1) am kürzesten gemacht wird, in einem Zustand, in welchem der erste Roboter (10) dem Werkstück (W) genau zugewandt ist,

wobei das Verfahren aufweist:

Steuern des ersten Roboters (10), um den Endeffektor (17) zu einer Vielzahl von zu bearbeitenden Abschnitten des Werkstücks (W) hinzubewegen, und

Steuern des ersten Roboters (10), um Bearbeitung an den zu bearbeitenden Abschnitt mit dem Endeffektor (17) in einem Zustand auszuführen, in welchem der Endeffektor (17) zu dem zu bearbeitenden Abschnitt hin angeordnet ist,

wobei das Steuern des ersten Roboters (10), um den Endeffektor (17) zu einer Vielzahl von zu bearbeitenden Abschnitten des Werkstücks (W) hinzubewegen, Bewegen des Endeffektors (17) aufweist zwischen einer Position, welche höher als ein Basis-Ende (PE1) des ersten Armabschnitts (13) ist, und einer Position, welche niedriger als das Basis-Ende (PE1) des ersten Armabschnitts (13) ist, unter Verändern des Abstands (L1) zwischen der zweiten Achse (Ax2) und der dritten Achse (Ax3) mit dem Abstand-Einstellung-Aktuator (27).

2. Verfahren gemäß Anspruch 1, wobei die Bearbeitungsvorrichtung ferner aufweist:

eine Steuervorrichtung (100), welche konfiguriert ist, um den ersten Roboter (10) zu steuern, um den Endeffektor (17) zu bewegen zwischen einer Position, welche höher als ein Basis-Ende-Abschnitt (PE1) des ersten Armabschnitts (13) ist, und einer Position, welche niedriger als der Basis-Ende-Abschnitt (PE1) des ersten Armabschnitts (13) ist, in einem Zustand, in welchem ein Spitzenabschnitt des zweiten Armabschnitts (14) näher an einer Seite des Werkstücks (W) positioniert ist als der Basis-Ende-Abschnitt (PE1) des ersten Armabschnitts (13).

3. Verfahren gemäß Anspruch 2, wobei das Steuern des ersten Roboters (10) um den Endeffektor (17) zu bewegen zwischen der Position, welche höher als der Basis-Ende-Abschnitt (PE1) des ersten Armabschnitts (13) ist, und der Position, welche niedriger als der Basis-Ende-Abschnitt (PE1) des ersten Armabschnitts (13) ist, aufweist: Steuern des ersten Roboters (10), um den Spitzenabschnitt (DP1) des ersten Armabschnitts (13) zwischen der Position, welche höher als der Basis-Ende-Abschnitt (PE1) des ersten Armabschnitts (13) ist, und der Position, welche niedriger als der Basis-Ende-Abschnitt (PE1) des ersten Armabschnitts (13) ist, zu bewegen.

4. Verfahren gemäß Anspruch 2 oder 3, wobei das Steuern des ersten Roboters (10), um den Endeffektor (17) zu bewegen zwischen der Position, welche höher als der Basis-Ende-Abschnitt (PE1) des ersten Armabschnitts (13) ist, und der Position, welche niedriger als der Basis-Ende-Abschnitt (PE1) des ersten Armabschnitts (13) ist, aufweist: Steuern des ersten Roboters (10), um den Abstand (L1) zwischen der zweiten Achse (Ax2) und der dritten Achse (Ax3) mit dem Abstand-Einstellung-Aktuator (27) zu ändern.

5. Verfahren gemäß einem der Ansprüche 1 bis 4, wobei der erste Roboter (10) derart positioniert wird, dass ein Abstand von einem höchsten in dem Werkstück (W) zu bearbeitenden Abschnitt zu dem Basis-Ende (PE1) des ersten Armabschnitts (13) und ein Abstand von einem niedrigsten in dem Werkstück (W) zu bearbeitenden Abschnitt zu dem Basis-Ende (PE1) des ersten Armabschnitts (13) in einem Zustand, in welchem der erste Roboter (10) dem Werkstück (W) genau zugewandt ist, eine mittels einer Formel (1) erlangte Länge La oder kleiner werden.

$$La = L11 + L21 + L31 \qquad \ldots \qquad (1)$$

L11: ein längster Abstand von der zweiten Achse (Ax2) zu der dritten Achse (Ax3)
L21: ein Abstand von der dritten Achse (Ax3) zu der vierten Achse (Ax4)
L31: ein Abstand von der vierten Achse (Ax4) zu dem Endeffektor (17)

6. Verfahren gemäß Anspruch 5, wobei der erste Roboter (10) derart positioniert wird, dass ein Abstand von einer Position der vierten Achse (Ax4) zu dem Basis-Ende (PE1) des ersten Armabschnitts (13), wenn der Endeffektor (17) angeordnet ist, um in der Lage zu sein, eine Bearbeitung an dem höchsten zu bearbeitenden Abschnitt in dem Werkstück (W) auszuführen, und ein Abstand von der Position der vierten Achse (Ax4) zu dem Basis-Ende (PE1) des ersten Armabschnitts (13), wenn der Endeffektor (17) angeordnet ist, um in der Lage zu sein, eine Bearbeitung an dem niedrigsten zu bearbeitenden Abschnitt in dem Werkstück (W) auszuführen, eine mittels einer Formel (2) erlangte Länge Lb oder weniger werden, in einem Zustand, in welchem der erste Roboter (10) dem Werkstück (W) genau zugewandt ist.

$$Lb = L11 + L21 \qquad \ldots \qquad (2)$$

7. Verfahren gemäß Anspruch 5 oder 6, wobei der erste Roboter (10) derart positioniert wird, dass ein Abstand von der Position der vierten Achse (Ax4) zu dem Basis-Ende (PE1) des ersten Armabschnitts (13), wenn der Handgelenkabschnitt (15) in einer vertikalen Richtung nach unten hin ausgerichtet ist und der Endeffektor (17) zu dem höchsten zu bearbeitenden Abschnitt in dem Werkstück (W) hin angeordnet ist, und ein Abstand von der Position der vierten Achse (Ax4) zu dem Basis-Ende (PE1) des ersten Armabschnitts (13), wenn der Handgelenkabschnitt (15) in der vertikalen Richtung nach oben hin ausgerichtet ist und der Endeffektor (17) zu dem niedrigsten in dem Werkstück (W) zu bearbeitenden Abschnitt hin angeordnet ist, die mittels der Formel (2) erlangte Länge Lb oder weniger werden, in einem Zustand, in welchem der erste Roboter (10) dem Werkstück (W) genau zugewandt ist.

$$Lb = L11 + L21 \qquad ... \qquad (2)$$

**8.** Verfahren gemäß Anspruch 7, wobei der erste Roboter (10) derart positioniert wird, dass eine Höhe des Basis-Endes (PE1) des ersten Armabschnitts (13) eine mittels einer Formel (3) erlangte Höhe Ha oder mehr wird.

$$Ha = HH - L21 \cdot \cos\theta - L11 \qquad ... \qquad (3)$$

HH: eine Höhe der vierten Achse (Ax4), wenn der Handgelenkabschnitt (15) in der vertikalen Richtung nach unten hin ausgerichtet ist und der Endeffektor (17) zu dem höchsten in dem Werkstück (W) zu bearbeitenden Abschnitt hin angeordnet ist
θ: ein Mindestwert eines Winkels, welcher von einer geraden Linie, welche senkrecht zu der dritten Achse (Ax3) und der vierten Achse (Ax4) ist, und einer Mittelachse des Handgelenkabschnitts (15) gebildet ist.

**9.** Verfahren gemäß Anspruch 8, wobei der erste Roboter (10) derart positioniert wird, dass die Höhe des Basis-Endes (PE1) des ersten Armabschnitts (13) eine mittels einer Formel (4) erlangte Höhe Hb oder weniger wird.

$$Hb = HL + L21 \cdot \cos\theta + L11 \qquad ... \qquad (4)$$

HL: die Höhe der vierten Achse (Ax4), wenn der Handgelenkabschnitt (15) in der vertikalen Richtung nach oben hin ausgerichtet ist und der Endeffektor (17) zu dem niedrigsten zu bearbeitenden Abschnitt in dem Werkstück (W) hin angeordnet ist.

**10.** Verfahren gemäß Anspruch 9, wobei der erste Roboter (10) derart positioniert wird, dass ein Abstand von einer Position zu dem Basis-Ende (PE1) des ersten Armabschnitts (13), wobei die Position derart erlangt wird, dass die Position der vierten Achse (Ax4), wenn der Handgelenkabschnitt (15) in der vertikalen Richtung nach unten hin ausgerichtet wird und der Endeffektor (17) zu dem höchsten zu bearbeitenden Abschnitt in dem Werkstück (W) hin angeordnet wird, zu einer Vorderseite um einen Abstand Lc verschoben wird, welcher mittels einer Formel (5) erlangt wird, und um eine Höhe Hc nach unten hin verschoben wird, welche mittels einer Formel (6) erlangt wird, und ein Abstand von einer Position zu dem Basis-Ende (PE1) des ersten Armabschnitts (13), wobei die Position derart erlangt wird, dass die Position der vierten Achse (Ax4), wenn der Handgelenkabschnitt (15) in der vertikalen Richtung nach oben hin ausgerichtet wird und der Endeffektor (17) zu dem niedrigsten zu bearbeitenden Abschnitt in dem Werkstück (W) hin angeordnet wird, um den Abstand Lc, welcher mittels der Formel (5) erlangt wird, zu einer Vorderseite hin verschoben wird, und um die Höhe Hc, welche mittels der Formel (6) erlangt wird, verschoben wird, zu einem längsten Abstand von der zweiten Achse (Ax2) zu der dritten Achse (Ax3) oder weniger werden, in einem Zustand, in welchem der erste Roboter (10) dem Werkstück (W) genau zugewandt ist.

$$Lc = L21 \cdot \sin\theta \qquad ... \qquad (5)$$

$$Hc = L21 \cdot \cos\theta \qquad \ldots \qquad (6)$$

## Revendications

1. Procédé de production d'une pièce à travailler (W) au moyen d'un appareil de traitement (1) comprenant :

   un premier robot (10) comprenant
   une partie rotative (12), une première partie de bras (13), une seconde partie de bras (14), une partie de poignet (15) et une partie de pointe (16) mutuellement reliées en série,
   un premier actionneur (21) conçu pour faire tourner la partie rotative (12) autour d'un premier axe (Ax1),
   un deuxième actionneur (22) conçu pour faire osciller la première partie de bras (13) autour d'un deuxième axe (Ax2),
   un troisième actionneur (23) conçu pour faire osciller la seconde partie de bras (14) autour d'un troisième axe (Ax3),
   une pluralité d'actionneurs de réglage de posture (24, 25, 26) conçus pour régler une posture de la partie de pointe (16), dans lequel la pluralité d'actionneurs de réglage de posture (24, 25, 26) comprend un quatrième actionneur (24) conçu pour faire osciller la partie de poignet (15) autour d'un quatrième axe (Ax4), un cinquième actionneur (25) conçu pour faire tourner la partie de poignet (15) autour d'un cinquième axe (Ax5), et un sixième actionneur (26) conçu pour faire tourner la partie de pointe (16) autour d'un sixième axe (Ax6),
   un actionneur de réglage de distance (27) conçu pour régler une distance (L1) entre le deuxième axe (Ax2) et le troisième axe (Ax3), et
   un effecteur d'extrémité (17) prévu sur la partie de pointe (16) et conçu pour appliquer un traitement à une pièce à travailler (W), **caractérisé en ce que**
   le premier robot (10) est positionné de sorte qu'une partie de pointe (DP1) de la première partie de bras (13) ou qu'une partie d'extrémité de base (PP2) de la seconde partie de bras (14) interfère avec la pièce à travailler (W), lorsque la pièce à travailler (W) est placée à une position définie pour que le premier robot (10) traite la pièce à travailler (W) et lorsque la première partie de bras (13) tourne autour du deuxième axe (Ax2), où la distance (L1) est rendue la plus longue, dans un état où le premier robot (10) fait exactement face à la pièce à travailler (W), et dans lequel le premier robot (10) est positionné de sorte que la partie de pointe (DP1) de la première partie de bras (13) et la partie d'extrémité de base (PP2) de la seconde partie de bras (14) n'interfèrent pas avec la pièce à travailler (W) lorsque la première partie de bras (13) tourne autour du deuxième axe (Ax2), où la distance (L1) est rendue la plus courte, dans un état où le premier robot (10) fait exactement face à la pièce à travailler (W),
   le procédé comprenant :

   la commande du premier robot (10) pour déplacer l'effecteur d'extrémité (17) vers une pluralité de parties à traiter de la pièce à travailler (W) ; et
   la commande du premier robot (10) pour appliquer un traitement à la partie à traiter avec l'effecteur d'extrémité (17) dans un état où l'effecteur d'extrémité (17) est disposé sur la partie à traiter,
   dans lequel la commande du premier robot (10) pour déplacer l'effecteur d'extrémité (17) vers une pluralité de parties à traiter de la pièce à travailler (W) comprend le déplacement de l'effecteur d'extrémité (17) entre une position plus haute qu'une extrémité de base (PE1) de la première partie de bras (13) et une position plus basse que l'extrémité de base (PE1) de la première partie de bras (13) tout en modifiant la distance (L1) entre le deuxième axe (Ax2) et le troisième axe (Ax3) avec l'actionneur de réglage de distance (27).

2. Procédé selon la revendication 1, dans lequel l'appareil de traitement comprend en outre :
   un dispositif de commande (100) conçu pour commander le premier robot (10) afin de déplacer l'effecteur d'extrémité (17) entre une position plus haute qu'une partie d'extrémité de base (PE1) de la première partie de bras (13) et une position plus basse que la partie d'extrémité de base (PE1) de la première partie de bras (13), dans un état où une partie de pointe de la seconde partie de bras (14) est positionnée plus près d'un côté de la pièce à travailler (W) que la partie d'extrémité de base (PE1) de la première partie de bras (13).

3. Procédé selon la revendication 2, dans lequel la commande du premier robot (10) pour déplacer l'effecteur d'extrémité (17) entre la position plus haute que la partie d'extrémité de base (PE1) de la première partie de bras (13) et la position plus basse que la partie d'extrémité de base (PE1) de la première partie de bras (13) comprend la commande du premier robot (10) pour déplacer la partie de pointe (DP1) de la première partie de bras (13) entre la position plus haute que la partie d'extrémité de base (PE1) de la première partie de bras (13) et la position plus basse que la partie d'extrémité de base (PE1) de la première partie de bras (13).

4. Procédé selon la revendication 2 ou 3, dans lequel la commande du premier robot (10), pour déplacer l'effecteur d'extrémité (17) entre la position plus haute que la partie d'extrémité de base (PE1) de la première partie de bras (13) et la position plus basse que la partie d'extrémité de base (PE1) de la première partie de bras (13), comprend la commande du premier robot (10) pour modifier la distance (L1) entre le deuxième axe (Ax2) et le troisième axe (Ax3) avec l'actionneur de réglage de distance (27).

5. Procédé selon l'une quelconque des revendications 1 à 4, dans lequel
le premier robot (10) est positionné de sorte qu'une distance entre une partie la plus haute à usiner dans la pièce à travailler (W) et l'extrémité de base (PE1) de la première partie de bras (13), et une distance entre une partie la plus basse à usiner dans la pièce à travailler (W) et l'extrémité de base (PE1) de la première partie de bras (13) deviennent une longueur La, obtenue par une formule (1), ou inférieure, dans un état où le premier robot (10) fait exactement face à la pièce (W).

$$La = L11 + L21 + L31 \ldots \quad (1)$$

L11 : la distance la plus longue entre le deuxième axe (Ax2) et le troisième axe (Ax3)
L21 : une distance entre le troisième axe (Ax3) et le quatrième axe (Ax4)
L31 : une distance entre le quatrième axe (Ax4) et l'effecteur d'extrémité (17)

6. Procédé selon la revendication 5, dans lequel le premier robot (10) est positionné de sorte qu'une distance entre une position du quatrième axe (Ax4) et l'extrémité de base (PE1) de la première partie de bras (13), lorsque l'effecteur d'extrémité (17) est agencé pour pouvoir appliquer un traitement à la partie la plus haute à traiter dans la pièce à travailler (W), et une distance entre la position du quatrième axe (Ax4) et l'extrémité de base (PE1) de la première partie de bras (13), lorsque l'effecteur d'extrémité (17) est agencé pour pouvoir appliquer un traitement à la partie la plus basse à traiter dans la pièce à travailler (W), deviennent une longueur Lb, obtenue par une formule (2), ou inférieure, dans un état où le premier robot (10) fait exactement face à la pièce à travailler (W).

$$Lb = L11 + L21 \quad \ldots \quad (2)$$

7. Procédé selon la revendication 5 ou 6, dans lequel le premier robot (10) est positionné de sorte qu'une distance entre la position du quatrième axe (Ax4) et l'extrémité de base (PE1) de la première partie de bras (13), lorsque la partie de poignet (15) est orientée vers le bas dans une direction verticale et lorsque l'effecteur d'extrémité (17) est disposé sur la partie la plus haute à traiter dans la pièce à travailler (W), et une distance entre la position du quatrième axe (Ax4) et l'extrémité de base (PE1) de la première partie de bras (13), lorsque la partie de poignet (15) est orientée vers le haut dans la direction verticale et lorsque l'effecteur d'extrémité (17) est disposé sur la partie la plus basse à traiter dans la pièce à travailler (W), deviennent la longueur Lb, obtenue par la formule (2), ou inférieure, dans un état où le premier robot (10) fait exactement face à la pièce à travailler (W).

$$Lb = L11 + L21 \quad \ldots \quad (2)$$

8. Procédé selon la revendication 7, dans lequel le premier robot (10) est positionné de sorte qu'une hauteur de l'extrémité de base (PE1) de la première partie de bras (13) devient une hauteur Ha, obtenue par une formule (3), ou inférieure.

$$Ha = HH - L21 \cdot \cos\theta - L11 \dots \quad (3)$$

HH : une hauteur du quatrième axe (Ax4) lorsque la partie de poignet (15) est orientée vers le bas dans la direction verticale et lorsque l'effecteur d'extrémité (17) est disposé sur la partie la plus haute à traiter dans la pièce à travailler (W)

$\theta$ : une valeur minimale d'un angle formé par une ligne droite perpendiculaire au troisième axe (Ax3) et au quatrième axe (Ax4), et un axe central de la partie de poignet (15)

9.  Procédé selon la revendication 8, dans lequel le premier robot (10) est positionné de sorte que la hauteur de l'extrémité de base (PE1) de la première partie de bras (13) devient une hauteur Hb, obtenue par une formule (4), ou inférieure.

$$Hb = HL + L21 \cdot \cos\theta + L11 \quad \dots \quad (4)$$

HL : la hauteur du quatrième axe (Ax4) lorsque la partie de poignet (15) est orientée vers le haut dans la direction verticale et lorsque l'effecteur d'extrémité (17) est disposé sur la partie la plus basse à traiter dans la pièce à travailler (W)

10. Procédé selon la revendication 9, dans lequel le premier robot (10) est positionné de sorte qu'une distance entre une position et l'extrémité de base (PE1) de la première partie de bras (13), la position étant obtenue de sorte que la position du quatrième axe (Ax4), lorsque la partie de poignet (15) est orientée vers le bas dans la direction verticale et lorsque l'effecteur d'extrémité (17) est disposé sur la partie la plus haute à traiter dans la pièce à travailler (W), est décalée vers un côté avant selon une distance Lc obtenue par une formule (5) et est décalée vers le bas selon une hauteur Hc obtenue par une formule (6), et une distance entre une position et l'extrémité de base (PE1) de la première partie de bras (13), la position étant obtenue de sorte que la position du quatrième axe (Ax4), lorsque la partie de poignet (15) est orientée vers le haut dans la direction verticale et lorsque l'effecteur d'extrémité (17) est disposé sur la partie la plus basse à traiter dans la pièce à travailler (W), est décalée vers un côté avant selon la distance Lc obtenue par la formule (5) et est décalée selon la hauteur Hc obtenue par la formule (6), deviennent une distance la plus longue entre le deuxième axe (Ax2) et le troisième axe (Ax3) ou inférieure, dans un état où le premier robot (10) fait exactement face à la pièce à travailler (W).

$$Lc = L21 \cdot \sin\theta \quad \dots \quad (5)$$

$$Hc = L21 \cdot \cos\theta \quad \dots \quad (6)$$

*Fig.1*

CONTROLLER

TARGET ACQUISITION UNIT — 111

FIRST CALCULATION UNIT — 112

DETERMINATION UNIT — 113

SECOND CALCULATION UNIT — 114

OUTPUT UNIT — 115

ACCUMULATION UNIT — 116

100

120

1

10

P2

P1

Ax5

25

23

14

Ax3

24

13B

27

13

W

Ax4

13A

15,26

Ax1

Ax7

12

31

16

Ax6

17

Ax2

L1

22

11,21

32

30

P1

10

Z

Y

X

EP 3 213 883 B1

# *Fig.2A*

# *Fig.2B*

EP 3 213 883 B1

Fig.3

EP 3 213 883 B1

# Fig.4

EP 3 213 883 B1

EP 3 213 883 B1

*Fig.5*

28

**Fig.6**

*Fig.7*

EP 3 213 883 B1

# Fig.8

*Fig.9*

## Fig.10

```
              ┌─────────────┐
              │    START    │
              └─────────────┘
                     │
        ┌────────────────────────────┐
        │ GENERATE OPERATION         │──── S01
        │ PATTERNS OF ROBOTS         │
        └────────────────────────────┘
                     │
        ┌────────────────────────────┐
        │     START CONVEYANCE        │──── S02
        └────────────────────────────┘
                     │
        ┌────────────────────────────┐
        │     EXECUTE MACHINING       │──── S03
        └────────────────────────────┘
                     │
        ┌────────────────────────────┐
        │   TERMINATE CONVEYANCE      │──── S04
        └────────────────────────────┘
                     │
                              S05
                 ◇─────────────
              < IS MACHINING    >  NO
               < TERMINATED?    >───────►
                 ◇─────────────
                     │ YES
              ┌─────────────┐
              │     END     │
              └─────────────┘
```

## Fig.11

```
                    ┌─────────────┐
                    │    START    │
                    └──────┬──────┘
                           │◄────────────────────────────────┐
              ┌────────────▼────────────┐                     │
              │  ACQUIRE TARGET VALUES  │                     │
              │  OF POSITION/POSTURE    │──S11                │
              │     OF TIP PORTION      │                     │
              └────────────┬────────────┘                     │
              ┌────────────▼────────────┐                     │
              │   SET OPERATION TARGET  │                     │
              │    VALUE OF SEVENTH     │──S12                │
              │ ACTUATOR TO INITIAL VALUE│                    │
              └────────────┬────────────┘                     │
              ┌────────────▼────────────┐                     │
              │   CALCULATE OPERATION   │                     │
              │ TARGET VALUES OF FIRST  │──S13               │
              │    TO SIXTH ACTUATORS   │                     │
              └────────────┬────────────┘                     │
                           │◄─────────────────────────────┐  │
                       ╱───┴───╲   S14                     │  │
                      ╱   IS    ╲                          │  │
                     ╱ OPERATION ╲                         │  │
                    ╱TARGET VALUES ╲── NO ───┐             │  │
                    ╲ OUTPUTTABLE? ╱          │             │  │
                     ╲           ╱            │             │  │
                      ╲    ╱    ╱             │             │  │
                       ╲──┬──╱                │             │  │
                          │ YES               │             │  │
                          │      ┌────────────▼────────────┐│  │
                          │      │   SET OPERATION TARGET  ││  │
                          │      │    VALUE OF SEVENTH     ││──S15
                          │      │       ACTUATOR          ││  │
                          │      └────────────┬────────────┘│  │
                          │      ┌────────────▼────────────┐│  │
                          │      │   SET OPERATION TARGET  ││  │
                          │      │   VALUES OF FIRST TO    ││──S16
                          │      │     SIXTH ACTUATORS     ││  │
                          │      └────────────┬────────────┘│  │
                       ╱──┴──╲   S17          │             │  │
                      ╱  IS   ╲               │             │  │
                     ╱INSTRUCTION╲── NO ──────┘─────────────┘  │
                     ╲COMPLETED? ╱                            │
                      ╲    ╱    ╱                             │
                       ╲──┬──╱                                │
                          │ YES                               │
                    ┌─────▼──────┐                            │
                    │    END     │                            │
                    └────────────┘                            │
```

**Fig.12A**

**Fig.12B**

**Fig.12C**

**Fig.12D**

**Fig.12E**

**Fig.12F**

*Fig.13*

Fig.14

EP 3 213 883 B1

Fig.15

*Fig.16*

CONTROLLER

1

120

TARGET
ACQUISITION UNIT — 111

100

FIRST
CALCULATION UNIT — 112

DETERMINATION
UNIT — 113

ACCUMULATION
UNIT — 116

SECOND
CALCULATION UNIT — 114

OUTPUT UNIT — 115

10

Ax3
14
25
Ax5
24
Ax4
15,26
W
50   16
17
Ax6
Ax2
22
13B 13A
13
27
Ax1
12   Ax7
11,21
10

EP 3 213 883 B1

39

Fig.17

EP 3 213 883 B1

Fig.18

EP 3 213 883 B1

*Fig.19*

EP 3 213 883 B1

# Fig.20

**EP 3 213 883 B1**

**REFERENCES CITED IN THE DESCRIPTION**

**Patent documents cited in the description**

- US 2006191476 A1
- JP H0642090 U
- JP 2008279496 A